# EUROPEAN PATENT SPECIFICATION

(11) **EP 1 541 070 B1**
(45) Date of publication and mention of the grant of the patent: **15.11.2006**
(21) Application number: 03708286.4
(22) Date of filing: 10.03.2003
(51) Int. Cl.: A47J 31/40, G07F 13/06, G07F 11/24, B65D 81/00

(54) **METHOD, MACHINE AND PACK FOR PRODUCING AND SHIPPING HOT AND COLD DRINKS**
VERFAHREN, MASCHINE UND PACKUNG ZUR HERSTELLUNG UND TRANSPORT VON HEISSEN UND KALTEN GETRÄNKEN
PROCEDE, MACHINE ET EMBALLAGE UTILISES DANS L'ELABORATION ET L'EXPEDITION DE BOISSONS CHAUDES ET FROIDES

(30) Priority: 04.07.2002 ES 200201558
(43) Date of publication of application: 15.06.2005
(73) Proprietor: Inventos para Sistemas Vending, S.L., 08022 Barcelona (ES)
(72) Inventor: NAVARRO ALCANTARA, Francisco, E-08208 Sabadell (ES)
(74) Representative: Durán Moya, Carlos
(86) International application number: PCT/ES2003/000104
(87) International publication number: WO 2004/004522

(56) References cited:
- EP-A1- 1 247 481
- US-A- 3 812 273
- US-A- 4 724 752
- US-A- 4 733 797
- US-A- 5 791 512
- PATENT ABSTRACTS OF JAPAN & JP 2001 250161 A (SANDEN CORP) 14 September 2001
- PATENT ABSTRACTS OF JAPAN & JP 10 275 273 A (SANYO ELECTRIC CO) 13 October 1998

## Description

### Technical field

The present invention relates to a method for automatically preparing and delivering hot and cold drinks such as, for example, expresso coffee, freeze-dried coffee, decaffeinated expresso coffee, hot chocolate, tea, lemon tea, camomile tea, pennyroyal and other infusions, clear soups,.., from single dose capsules of product in the solid state. In a second and a third aspect, the invention relates to a machine and to a pack of doses for the implementation of the method.

The method of the invention also permits the automatic preparation and delivery of hot or cold drinks from liquid single doses packed in unitary containers, for example UHT milk, cocoa, etc.

The method of the invention permits the automatic preparation and delivery of hot drinks by a combined method according to which the hot drink is prepared from one or more single dose capsules in the solid state, for example coffee with milk, from a single dose of expresso coffee and a single dose of powdered milk, and also permits the automatic preparation and delivery of hot drinks by a combined method according to which the hot drink is prepared from a single dose of product in the solid state and a single dose of product in the liquid state, for example expresso coffee with liquid UHT milk.

The method of the invention is applicable, with various degrees of automation and development, to machines for domestic use known as "domestic coffee-makers", is applicable to machines known as "office coffee machines" which are used to provide service to groups with a small number of persons (offices, workshops, schools, etc.)., is applicable to machines for the hotel, restaurant and catering trade known as "professional coffee machines", and is also applicable to self-service machines for large groups of users, i.e., "vending machines".

### Background of the invention

There are on the market a wide range of machines for preparing/dispensing hot drinks, and they will all be referred to hereinafter by the general term of *coffee machines.*

In general, the coffee machines prepare expresso coffee and some of them prepare other hot drinks such as, for example, freeze-dried coffee, infusions, tea, clear soups, expresso coffee with milk, etc.

Of the various hot drinks that can be prepared by said coffee machines, the preparation of expresso coffee with milk presents the greatest degree of difficulty.

There are no known automatic systems for preparing and obtaining expresso coffee with milk, of the highest quality, which maintain the aroma and flavour of the expresso coffee from the first to the last serving and which, using liquid milk, meet the most demanding public health requirements.

The conventional method for preparing expresso coffee with milk is described below.

Coffee machines having a high degree of automation and having the greatest number of integrated functions carry out the complete process, and the less automatic ones carry out only part of said process, the user having to perform the remainder of the operations manually.

The automatic machines which prepare expresso coffee with milk do so starting from powdered milk, using processes not exempt from a certain risk from the public health point of view, and no automatic machines are known which prepare expresso coffee with liquid milk.

The conventional process for the preparation of expresso coffee with milk consists of the following steps:
- grinding coffee;
- measuring out the amount of coffee required for one serving;
- introducing the dose of ground coffee into a generally frustoconical receptacle closed laterally and partially closed at the top and bottom by one or more filters which prevent the emergence of solid particles but permit the passage of liquids;
- placing the receptacle on the mouth piece of the hot water injector of the coffee machine;
- closing, under pressure, the coffee-containing receptacle against the mouth piece of the water injector;
- injecting hot water under pressure through the receptacle which contains the coffee;
- collecting the expresso coffee in a cup or beaker previously placed beneath the injector;
- measuring out the amount of powdered milk sufficient for preparing a coffee with milk;
- adding a dose of powdered milk with hot water to a small cup with beater, which will follow the path through a silicone tube to the expresso coffee and adding hot water (if the expresso coffee with milk is prepared "manually", once the expresso coffee is obtained, liquid milk is added, which, since it is not hot, cools the coffee slightly);
- adding sugar, (optional);
- serving;
- removing from the mouth piece of the injector, by means of ejection means, the receptacle which contained ground coffee and which, after the preparation of expresso coffee, contains coffee grounds;
- extracting and disposing off the grounds from the receptacle;
- cleaning the receptacle; and
- checking and replenishing stocks (only in automatic machines).

The quality of the coffee with milk prepared from a granular product by following the conventional method described depends on multiple variables that are difficult to control, both when the final preparation is carried out in machines for domestic use and when it is carried out in automatic machines such as, for example, vending machines.

The factors which affect the quality of the expresso coffee with milk, inasmuch as they relate to its flavour and aroma and to its hygienic characteristics, can be divided into three large groups.

With respect to the storage factors, in order to preserve the aroma and freshness it is necessary to keep the coffee, until the moment of preparation, closed in a sealed container, preferably without air.

In automatic machines of the vending type this requirement is not fulfilled, owing to the fact that the granular coffee is stored in containers of up to 5 kilos capacity, which may for many weeks, until replacement, be substantially empty, that is to say, with a few grams of coffee and several litres of air, thereby accelerating the oxidation of the coffee so that the aroma and freshness are lost. In applications for domestic use and for use in the hotel, restaurant and catering trade, preservation depends on the experience and care provided by the user.

With regard to the grinding, measuring and pressing, it should be pointed out that, in order to prepare a good quality expresso coffee, it is necessary to conform to the parameters established by the supplier of the product concerning grinding, measuring and pressing.

In automatic machines of the vending type, grinding, measuring and pressing depend on the precise adjustment of the machine, which varies over the course of time, depending on the maintenance and wear of the mechanisms. Such factors are also sensitive to variations in ambient temperature and humidity. In applications of the domestic type or hotel, restaurant and catering trade type, grinding, measuring and pressing depend on the experience and care provided by the user.

With regard to the factors of hygiene and cleanliness, it should be noted that the residues of previous servings may contaminate a fresh serving.

In manual machines, the hygiene and cleanliness of the machine depend on the experience and care provided by the user.

In automatic machines, especially vending type machines, it is difficult to maintain the machine in an adequate state of cleanliness and hygiene, since residues accumulate in inaccessible areas of the measuring mechanisms, especially in the endless worms for measuring out clear soup, sugar and powdered milk, and also in the silicone tubes (normally 20 to 30 centimetres long) which convey the prepared product to the cup. Said residues, because they come from perishable foods, deteriorate over time and may cause upsets or public health problems. The temperature and humidity inside the vending machines are high, owing to the inherent characteristics of what is served by such machines, and there is an additional risk factor caused by any residue that may adhere to any part of its path and deteriorate rapidly, contaminating the subsequent servings more severely.

A machine is known, from Patent Application EP 1 002 490 A1, for distributing drinks from single dose portions in powder form, stored inside the machine.

From Patent Application EP 1 089 240 A2 an automatic drinks vending machine is known which has a plurality of stores of capsules, each one of which contains a drink extract in powder form, and means for transferring said capsules from the capsule stores to a position where the drink is prepared.

Said patent applications provide improvements with regard to hygiene and cleanliness factors, but not with regard to the preservation of the aroma and freshness of the product, because, owing to the fact that they are open capsule stores, they do not preserve the aroma and freshness of the extract in powder form stored in the capsules, which cannot be hermetically sealed, taking into account that the conventional system of hot water injection is not compatible with hermetically sealed capsules. The machine described in patent application EP 1 002 490 A1 accepts only one type of capsule and, although the system described in patent application EP 1 089 240 A2 allows for the content of the capsules to be different, it does not allow for capsules of different sizes or shapes. In both cases the loading of the capsules into the respective stores is made one by one, involving the risk, in the case of the system described in patent application EP 1 089 240 A2, that capsules with different contents may be mixed in the same store.

There are at present on the market various types of conventional single doses of different shapes and volumes suitable in each case for the product which they contain according to the each manufacturer's own design. There are also on the market specific machines for each capsule, but none of said known machines can process two different types of capsules and no capsule can be processed in two types of machine.

The conventional single doses existing on the market can be classified in three large groups:
- A) unsealed single dose capsules of product in the solid state,
- B) sealed single dose capsules of product in the solid state, and
- C) single dose containers of product in the liquid state.

Drinks made from unsealed single dose capsules of product in the solid state are prepared in non-automatic machines adapted to the characteristics of each single dose, equipped with conventional hot water injectors for the preparation of drinks.

Drinks made from sealed single dose capsules of product in the solid state are prepared in non-automatic machines, adapted to the characteristics of each single dose and equipped with conventional hot water injectors and elements which break the seal of the capsule before initiating the injection of hot water.

No automatic machines are known for the preparation of hot drinks made from single doses of perishable products in the liquid state, for example single doses of UHT milk.

US 3812273 discloses a method and a device according to the preambles of claims 1 and 13, respectively. However, its mechanical elements are complex and delicate and due to the linear part through which the capsules are conveyed, the dimensions of the device are too much big for its use as a vending machine.

### Explanation of the invention

The aim of the present invention is to provide a new automatic method for preparing hot drinks: expresso coffee, freeze-dried coffee, decaffeinated expresso coffee, hot chocolate, tea, lemon tea, camomile tea, pennyroyal and other infusions, clear soups, etc. from single dose capsules of product in the solid state, which provides a complete and simultaneous solution to each and every one of the above mentioned problems and drawbacks of the prior art.

In particular, an objective of the present invention is to provide a single machine for processing different types of capsules.

To this end, according to a first aspect of the present invention, a method is disclosed for the preparation and delivery of hot drinks, having the features of claim 1.

Other features of the method according to the invention are defined in claims 2 to 10.

According to a second aspect of the invention, a pack of single doses of food product according to the features of claim 11 is disclosed.

Embodiments of the pack of the present invention are defined in claims 12 to 18.

According to a third aspect of the invention, a machine for the preparation and delivery of hot drinks is disclosed, having the features of claim 19, for the implementation of the method, and based on the new packs according to the invention.

Other features and modes of embodiment of the machine according to the present invention are defined in claims 20 to 41.

An expert in the field will understand that the present invention provides an automatic method for preparing and delivering hot drinks from liquid single doses packaged in unitary containers, for example UHT milk, cocoa, etc.

The present invention likewise provides an automatic method which makes it possible to prepare and deliver hot drinks by a combined method according to which the hot drink is prepared from single dose capsules in the solid state, for example expresso coffee, and the contents of a single dose of product in the liquid state, for example milk, is added in order to prepare, in this case, expresso coffee with milk.

Likewise, the present invention makes it possible to provide systems for storing and dispensing unsealed single dose capsules, in sealed stores arranged inside the machine. Thus, the present invention makes it possible to load and store sealed packs of unsealed single dose capsules of various products in the solid state, on measuring bases which accept packs of different measurements in relation to the measurements and characteristics of the capsules which they contain with the object of avoiding handling and mixing of products.

The invention permits the use of sealed packs of cylindrical shape with "n" capsules inside them, arranged axially one above the other. The inside diameter or measurement of the pack is related to the outside diameter or measurement of the capsule in order to facilitate sliding and axial guiding of the capsules, preventing them from overturning.

The invention makes it possible to prepare selectively, one by one, the capsules of the pack from the inside of the base on which the pack is inserted in the machine and to convey the capsules selectively to the water injector and insert them.

According to the present invention, when the user of the machine, by means of conventional systems, selects a drink, for example expresso coffee, the machine automatically and selectively separates from one of the stored packs which contain the single dose of the selected product a single dose unit of product and automatically prepares and dispenses the drink, for example expresso coffee.

The present invention allows the remainder of the single doses of a pack of single doses that are not used for the preparation of the last serving required by the user (including those which formed part of the pack with the last single dose used) to remain in their original packs, maintaining the hermetically sealed conditions of the pack.

A great advantage enjoyed by the present invention is that it makes it possible, with a single type of injector, to use capsules of different sizes and shapes, without doing more than change or adjust the clamps.

In addition, one or more conventional hot water injectors may be located in the dispensing machine, each one with clamping flanges having shapes and characteristics suitable for each of the various measurements and characteristics of the different types of capsule stored in the machine.

It will then be understood that the invention makes it possible to dispense liquid single doses with or without prior heating into a cup arranged for the purpose, which may be empty or contain a serving prepared by the same machine, for example an expresso coffee for preparing, in this case, an expresso coffee with milk. The order of pouring liquids onto the cup intended for consumption may be reversed, that is to say, in the case of the previous example, pouring first the milk and then the expresso coffee into the same cup.

### Brief description of the drawings

Other features and advantages of the present invention are described hereinafter, with reference to some preferred embodiments thereof, illustrated by way of non-limiting example in the appended drawings, in which:
Figure 1 is a diagrammatic view in elevation of a machine which incorporates the method and part of the mechanisms of the invention.
Figure 2 is an enlarged view in elevation of a detail of said machine which corresponds to dispensing mechanisms with bottom axial discharge for unsealed capsules stored in tubular packs.
Figure 3 is an enlarged view in elevation of a detail of said machine which corresponds to a dispensing mechanism with bottom axial discharge for sealed capsules stored coaxially in a tubular pack.
Figure 4 is a plan view of a detail, according to VI-VI, of Figure 3.
Figure 5 is an enlarged view in elevation of a detail of said machine which corresponds to dispensing mechanisms with bottom discharge for unsealed capsules stored linearly in tubular packs.
Figure 6 is an enlarged view in elevation of a detail of said machine which corresponds to a dispensing mechanism for sealed capsules stored in a pack, in the form of a continuous belt wound in the form of a spiral.
Figure 7 corresponds to a plan view of a detail of Figure 6.
Figure 8 is a view in elevation which corresponds to a pack of sealed capsules in the form of a continuous belt.
Figure 9 shows in elevation the operating layout of a mechanism for dispensing hot drinks made from liquid single doses and also the operating layout for the mechanism for dispensing sugar and spoons.
Figure 10 corresponds to a view in elevation of an injector for hot water under pressure, with interchangeable clamps.
Figure 11 represents a sequence for drink preparation, by injecting hot water into one type of sealed single dose capsule, carried out by an injector with exchangeable clamps. Said Figure also shows the preparation and delivery of a drink made from a single dose of product in the liquid state.
Figure 12 represents a sequence for the injection of hot water into another type of sealed single dose capsule, carried out by an injector with exchangeable clamps.
Figure 13 shows in elevation a variant of a machine according to the invention, with a main drum and a plurality of secondary drums.
Figure 14 shows a plan view of the variant of the machine of Figure 13.

### Detailed description of the invention

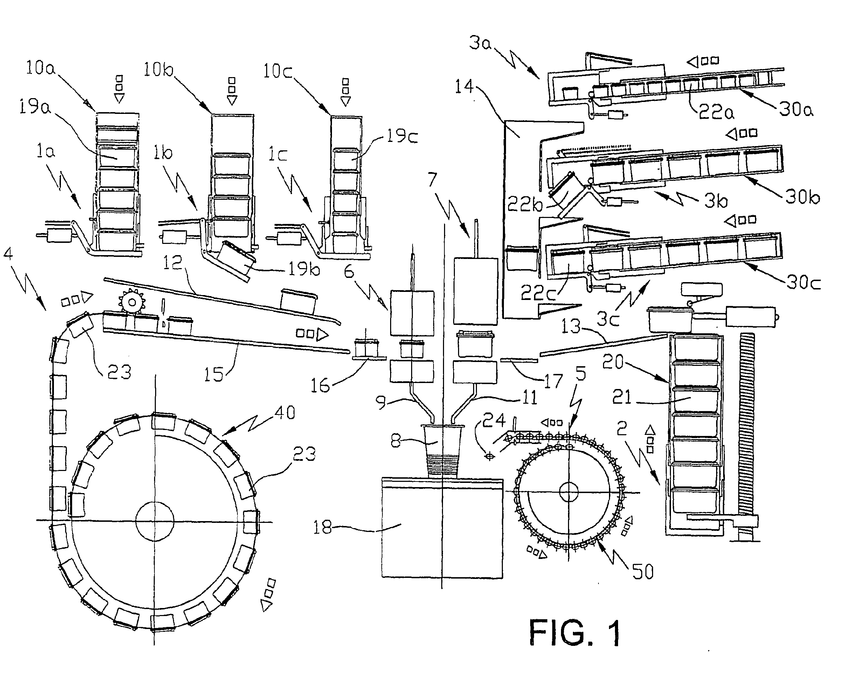

Referring to Figure 1, the reference numerals 1a, 1b, 1c designate respective assemblies of mechanisms for dispensing unsealed capsules, with bottom axial discharge, there being inserted into each of said dispensers tubular axial packs 10a, 10b, 10c which store capsules 19a, 19b, 19c.

The reference numeral 2 designates a mechanism for dispensing sealed capsules, with top axial discharge, into which dispenser a tubular axial pack 20 storing capsules 21 is inserted.

The reference numerals 3a, 3b, 3c designate respective mechanisms for dispensing unsealed capsules, with bottom discharge, into each of which said dispensers tubular linear packs 30a, 30b, 30c storing capsules 22a, 22b, 22c are inserted; 4 designates a dispensing mechanism for sealed capsules stored in a pack of sealed capsules in the form of a continuous belt 40, wound in a spiral, which stores capsules 23; 5 is an assembly for dispensing sugar and spoons, stored in a pack in the form of a continuous belt 50, wound in a spiral, which stores servings of sugar and spoons 24; 6 designates a first injector for hot water under pressure; 7 designates a second injector for hot water under pressure; 8 is a cup which receives the hot drink dispensed by each of said injectors. The reference numerals 9 and 11 designate tubes which convey the drink from the outlet of the corresponding injectors to the cup 8; 12 is an inclined plane which receives and translates the capsules dispensed by the mechanisms 1a, 1b and 1c; 13 is an inclined plane which receives and translates the capsules dispensed by the mechanism 2.

The reference numeral 14 designates a conduit for the capsules dispensed by the mechanisms 3a, 3b, 3c; 15 is an inclined plane which receives and translates the capsules dispensed by the mechanism 4; the reference numeral 16 designates a seat where the capsules which slide irrespectively on the inclined planes 12 and 15 are collected; the reference numeral 17 is a seat where the capsules are collected which slide on the inclined plane 13 and/or circulate through the conduit 14; and 18 is a base which supports the cup 8.

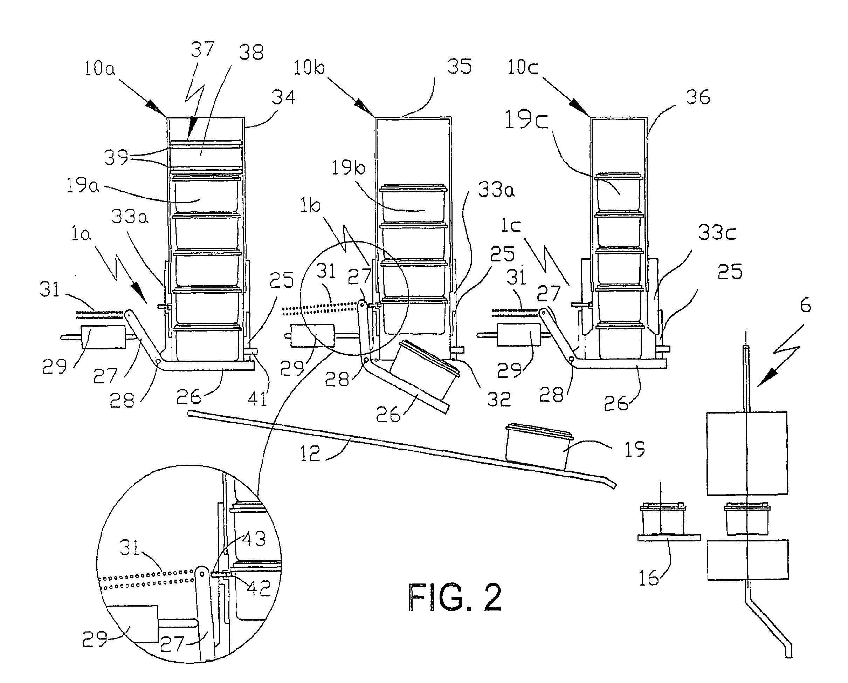

In Figure 2, each of the dispensing assemblies 1a, 1b, 1c comprises a dispenser body 25 of cylindrical shape, open at both ends, the lower end being closed by a lid 26 which has an extension 27, said lid pivoting on an axis 28. An electromagnet 29 acts on the extension 27 to force the opening of said lid 26, by overcoming the force of a biasing spring 31. When the magnet is de-energised, the force of the spring 31 holds the lid closed against the lower end of the body of the dispenser, producing a sealed closure between said lid and a O-ring seal 32 which surrounds the opening located on the base of the dispenser.

The upper opening of said dispenser body 25 has a profile suitable for receiving, in a sealed manner, adapters 33 of tubular shape open at both ends. The drawing shows two types of adapters: the adapter 33a located in the dispensers 1a and 1b and the adapter 33c located in the dispenser 10c. The upper opening of each of said adapters has a profile and dimensions suitable for housing packs of capsules in a sealed manner. Onto the same capsule dispenser 1 it is possible to feed, in succession, packs of different dimensions and shapes, for example 10a, 10c, in each case changing the adapter 33, for example 33a, 33c, so that in the same type of dispenser it is possible to dispense capsules of different shapes and dimensions, for example capsules 19a, 19c.

The packs 10a, 10b, 10c respectively comprise tubes 34, 35, 36 inside which are respectively located capsules 19a, 19b, 19c having shapes, dimensions and contents which may be different. Said packs, before being inserted into the corresponding adapter of the respective dispenser, are closed hermetically and may contain an inert gas, preferably lighter than air, to preserve the aroma and flavour of the single doses of product in the solid state. The packs have the lower end closed by a removable lid, for example made of paper, plastic, aluminium, etc., and may also have a removable upper lid. The packs 10b and 10c have only the upper lid removable, and the pack 10a also has the upper lid removable.

The operations which an operator must carry out in order to place a pack in the corresponding dispenser are as follows:
- remove the previous pack;
- remove the adapter 33 in the case where the new pack is of different dimensions from the previous one;
- put in place a new adapter suitable for the geometric characteristics of the new pack;
- remove the lower lid of the pack, for example made of paper, which hermetically closes the new pack;
- place the new pack in the corresponding adapter; and
- in the case of packs with removable upper lid, also remove the upper lid, and place inside the pack the piston assembly 37.

The piston assembly 37 comprises a piston body 38 and O-ring seals 39. The piston assembly engages in a sealed manner and slidably inside the tube 34. The weight of the piston assembly 37 collaborates with their weight so that the capsules slide down towards the outlet of the dispenser. The piston body may be of ferromagnetic material, in which case a ferromagnetic detector 41 located at the base of the body of the dispenser 33a detects when the piston reaches its lowest position and emits a signal to the central processor of the machine, not shown, indicating that all the capsules of the pack have been dispensed.

When the electromagnet 29 acts on the extension 27 of the lid 26, overcoming the force of the opposing spring 31, the lower lid 26 of the measuring device opens and the capsule located in the lowest position is dispensed onto an inclined plane 12 which conveys it to a seat 16. Said inclined plane 12 may advantageously be substituted by a mechanical conveying means, for example a conveyor belt.

Each of the adapters 33 has a capsule retaining mechanism which comprises, for example, a pin 42 and a biasing spring 43.

During the opening of the lid 26, the extension 27 acts on the pin 42, overcoming the force of a biasing spring 43 and causing said pin to advance to a position suitable for retaining the capsule located immediately above the capsule located in the lowest position, which is the one which is dispensed in each case.

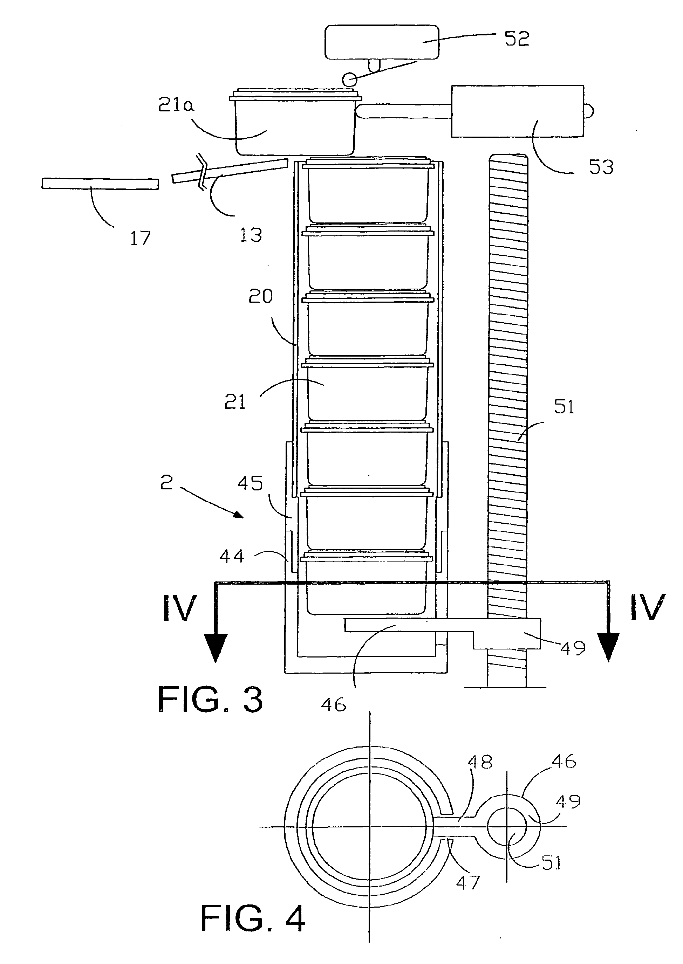

Figures 3 and 4 show a dispensing mechanism with top axial discharge 2 for sealed capsules 21 stored coaxially in a tubular pack 20. The dispensing mechanism comprises a base 44 of tubular shape with the lower end closed and the upper end open. The opening of the upper end is shaped to receive an adapter 45, said adapter being substantially cylindrical in shape and open at both ends, the upper opening of said adapter 45 being of a shape suitable for receiving internally the outer profile of packs 20. Onto the same capsule dispenser 2 it is possible to feed, in succession, packs of different dimensions and shapes, in each case changing the adapter 45.

The tubular walls of the base 44, of the adapter 45 and of the pack 20 are open along the whole of their length via a slot 47 parallel to their respective longitudinal axes. When mounting said adapter 45 on said base 44, and said pack 20 on said adapter 45, conventional geometric locators, not shown, fix the radial position of said elements to obtain the alignment of said slots.

Through the inside of said elements 44, 45 and 20 a pusher body 46 slides coaxially. The body 48 of the pusher body 46 passes through the slot 47 and, via a sliding mechanism, for example a nut/screw 49, 51, actuated by a conventional system, not shown, pushes upwards the capsules 21 of the pack 20 which bear on said pusher body.

The operation of the dispenser assembly 2 is as follows. The operator inserts on the base 44 an adapter 45 having measurements suitable for the pack 20 which he then inserts, the geometric locators causing assembly to be effected so that the slots 27 are aligned. The control system of the machine has previously positioned the pusher body 46 in the top position of its stroke, so that the capsules 21 bear on the pusher body. At the moment when a user orders a serving of hot drink which is to be prepared from a capsule of said pack, the actuating system of the nut/screw mechanism, not shown, is actuated, causing the pusher body to rise until the capsule 21a which occupies the top position in the pack actuates a microswitch 52 located above the pack, and deactivates the movement of the nut/screw mechanism when the capsule 21a has been completely extracted axially from the pack. An electromagnet 53 then pushes the capsule 21a, causing it to slide on an inclined plane 13 which may advantageously also be a movable belt which conveys it to the seat 17 from which it will be inserted into the respective injector.

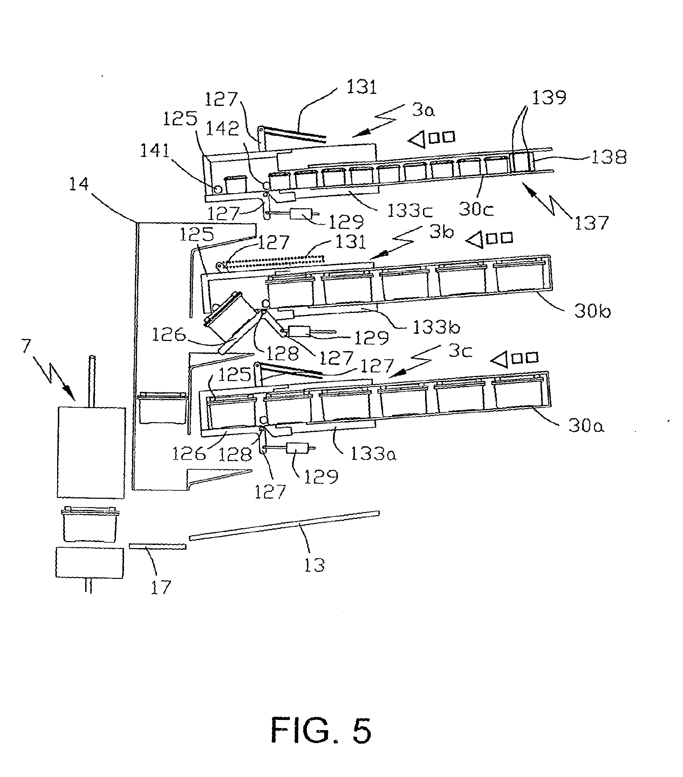

Figure 5 shows three dispenser assemblies 3a, 3b, 3c with bottom capsule discharge, in which are respectively inserted three tubular packs 30a, 30b, 30c. The operation of said dispenser assemblies 3a, 3b, 3c is analogous to that of the dispensers 1a, 1b, 1c. The elements which in said dispenser assemblies 3a, 3b, 3c perform functions analogous to those of the elements of the dispenser assemblies 1a, 1b, 1c shown in Figure 2 have been designated with the same reference numeral as in said Figure 2, with the addition of 100.

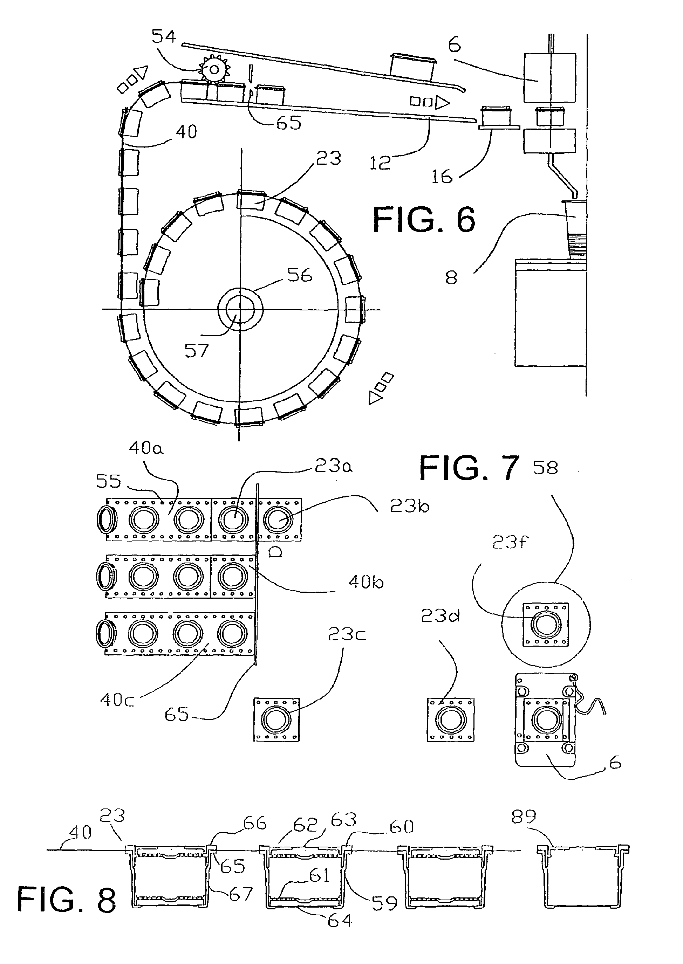

Figures 6 and 7 show a dispenser mechanism for sealed capsules stored in a pack in the shape of a continuous belt wound in the form of a spiral.

In the machine, a plurality of packs in the shape of a spiral belt may be stored, rolled on respective reels 56. In the plan view shown in Figure 7, packs 40a, 40b and 40c have been shown.

Each pack consists of a plurality of sealed capsules 23 received at regular intervals on a continuous belt 40, said continuous belts having lines of equal holes located at regular intervals on the edges of said belt. Each belt is wound on a respective reel 56.

In the machine the packs 40a, 40b, 40c are located on a post 57 on which they can rotate freely.

The machine has toothed pinions 54 for independently driving each of the belts via the lines of holes 55. A conventional actuation system, not shown, selectively advances the belt selected for preparing the serving required by the user. The advance of the selected belt, controlled by the actuation means, is equal to the "pack pitch" which is defined as the distance between two consecutive capsules. Once the selected belt has advanced by one step, a cutting mechanism 65 cuts through the belt and separates a capsule. The selected capsule then passes through the positions 23a, 23b, 23c, 23d, 23e, 23f. In the position 23c, the capsule is inserted into the injector 6 and in the position 23f the capsule already used is removed to a store 58 which receives the used capsules. The displacement and translation of the capsule may be effected by means of inclined planes or preferably by leading it onto conveyor belts, and the insertion and removal of the capsule in the injector may be effected by pneumatic, electromagnetic, mechanical means, etc.

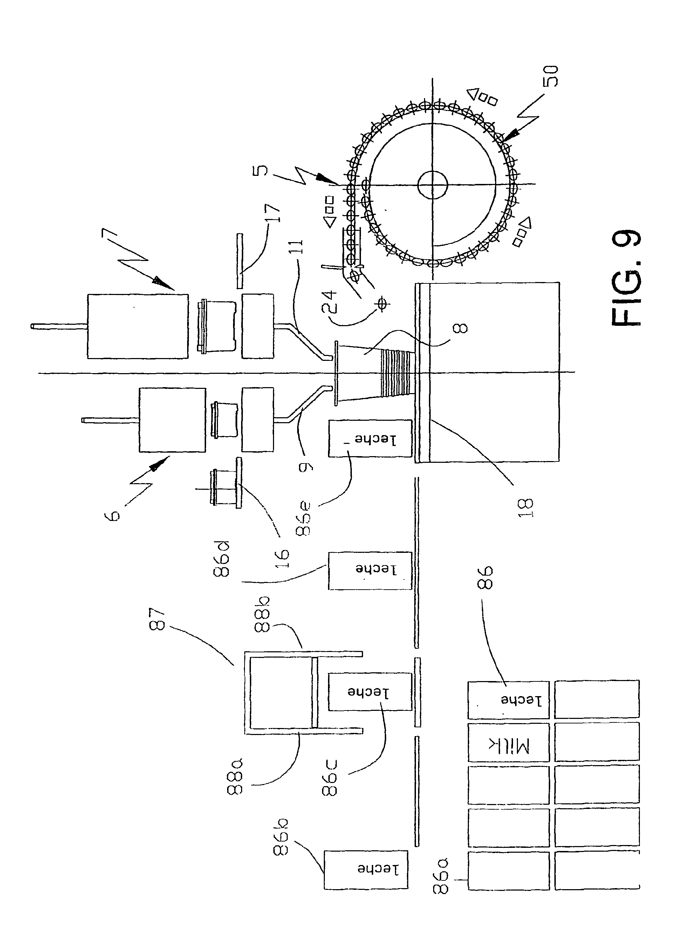

Figure 8 shows a pack as a continuous belt 4 of sealed capsules, with sealed capsules 23 inserted at regular intervals into a continuous belt 40, capable of being wound up like a reel, which has entrainment holes 55 at intervals. Said sealed capsules 23 consist of receptacles 59, preferably cylindrical or frustoconical, which have the upper end open with a disc-shaped flange which projects outwards 65, a lateral wall 67 and a base 64. The base 64 has weakened zones to enable it to be torn and/or opened. The lateral wall 67 has an internal ledge suitable for receiving a top disc-shaped filter 60 which engages with the inner wall of the receptacle.

The top filter 60 has a disc-shaped flange towards the outside 66 which projects above the upper part of the receptacle 59 and which has an outside diameter substantially equal to that of the flange 65, the upper face of said disc-shaped flange 66 of said top filter 60 having a flat top face of a shape such that it creates a hermetic seal when it is applied with pressure against the flat opposing surface of a hot water injector.

Inside said receptacles 59 and adjacent to the base 64 there is a bottom filter 61. The single dose of solid product is seated in the space defined inside the receptacle 59, contained between the two filters 60, 61 and the lateral wall 67.

A seal 62 with a weakened central zone to enable it to be torn and/or opened is seated internally in the upper part of the top filter 60, creating a space between said filter and said lid. The upper part of said lid does not project above the top of the upper face of said disc-shaped flange 66 of the top filter 60. Between the lower part of the disc-shaped flange 66 and the upper part of the flange 65 a space is defined which is of a shape suitable for engaging with an analogous shape of the belt 40 so that the capsules engage in and are retained by said belt to constitute the pack.

Said Figure 8 also shows the capsule 89 for liquid single doses having characteristics equal to the capsule 23 and in which the bottom filter 61 has been omitted and the top filter 60 has been modified by omitting the filtering surface and leaving open and without obstacles the space which was occupied by said filtering surface.

In Figure 9, the reference numeral 86 designates a single dose container of liquid drink, such as, for example, a single dose of UHT milk.

When the delivery and heating of the container 86 is selected, said single dose is translated via conventional systems, following a path, for example, 86a, 86b, 86c, 86d, 86e, from a position 86a inside the machine in which the single doses are stored conventionally, to a position 86e in which it is made available to the user who has requested the serving, said position being located, for example, close to the cup in which is served a hot drink prepared from a single dose in the solid state, such as an expresso coffee.

In the intermediate position 86c, a microwave heating apparatus 87 heats the liquid single dose. Said microwave heating apparatus has entry and exit doors, respectively 88a and 88b, which open to permit the entry and exit of the single dose, and remain closed during the heating of said single dose. Once heating is completed, the door 88b of the microwave opens and the single dose follows the path 86d, 86e. In the case where the user has selected the serving of a cold drink, the path followed is the same, but no heating is carried out.

Figure 9 also shows a dispenser for a dose of sugar 5, in which the doses of sugar 24 are contained in a pack in the shape of a continuous belt 50, the supply of said doses being analogous to that described with reference to the continuous belt pack dispenser 4. The dispensing mechanism 5 dispenses the doses of sugar by depositing them on the base 18. On said base 18 rests the cup 8 for receiving the supply of hot drink, and the single dose of liquid drink, for example UHT milk, is dispensed with or without heating, the doses of sugar are also dispensed, and in the same wrapping which wraps the dose of sugar for a serving a spoon may also advantageously be wrapped.

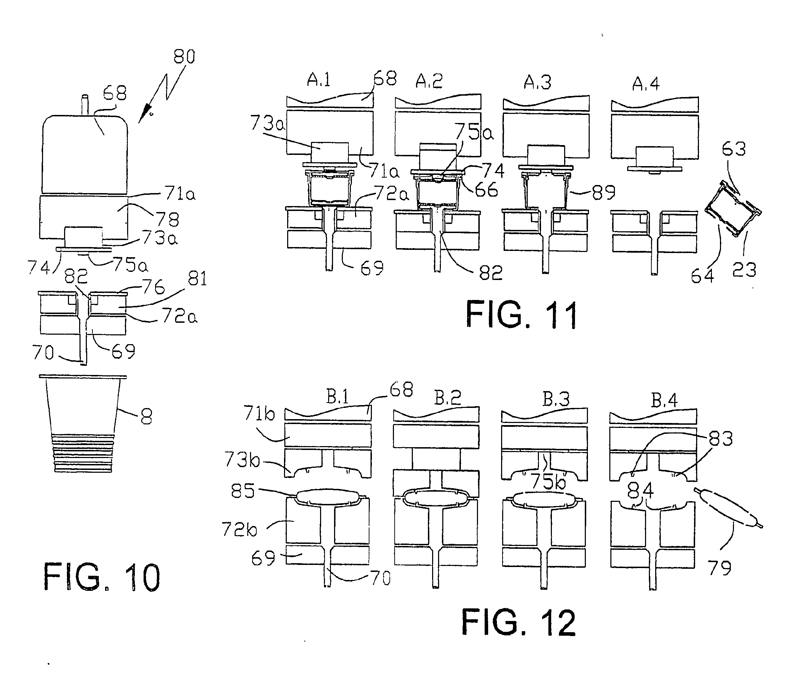

Figures 10, 11 and 12 show a hot water injector 80 with exchangeable clamps, which has a fixed upper body 68 and a fixed lower body 69 with an outlet for liquids 70. Mounted respectively on said upper and lower bodies 68, 69 are an exchangeable top clamp 71a, 71b and an exchangeable bottom clamp 72a, 72b. The exchangeable top clamp 71 comprises an upper clamp body 78 detachably connected to the upper body of the injector 68 which, in a leaktight manner, conducts the injection of water under pressure which said upper body injects in a conventional manner to the bottom outlet 75 of said exchangeable top clamp. The bottom outlet 75 forms part of a piston 73a which slides axially and hermetically inside said clamp 71a. Said piston 73a has a bottom flange 74 with a flat lower surface shaped to form a leaktight seal with a related surface of a single dose capsule.

When the injection of hot water is commanded, the piston 73a slides axially and hermetically downwards, impelled by a mechanical, resilient mechanical, pneumatic or hydraulic system until the surface 74 makes contact with the capsule, the contact with said capsule prevents the piston from continuing to descend, and the piston stops, applying a pressure via its surface 74 against the corresponding part of the capsule, creating a hermetic seal.

The bottom clamp 72a consists of a body 81 with a surface 76 on which the capsule bears, and a hollow cylindrical needle 82 shaped so as to tear or perforate the lower part of the capsule. Said needle may project above said surface 76 or advantageously be resiliently connected to the body 81 so that when the body receives the pressure transmitted to it by the capsule, which in turn receives it via the movement of the piston 73a, the needle 82 projects above said surface 76 and tears or perforates the lower surface of said capsule, returning to its rest position when the piston 73a ceases to transmit pressure.

Figure 11 shows a sequence A1-A4 in which the injector 80 injects hot water under pressure to a capsule 23. A-1 shows the initial position of the capsule 23 located in the injector. Mounted in the injector are the top clamp 71a and the bottom clamp 72a. In the position A-2 the piston 73a has descended, the surface 74 has come into contact with the surface 66 of the capsule, creating a hermetic seal, the outlet 75a has perforated/torn the surface 63 of the capsule, and the needle 82 which projects above the surface 76 has perforated/torn the surface 64 of the capsule. Once said position has been reached, hot water is injected under pressure to prepare the hot drink from the single dose of product in the solid state contained in the capsule, said water enters the capsule through the outlet 75a, passing through the top filter, and emerges through the perforated/torn surface 64 of the capsule after having passed through the bottom filter and prepared the hot drink, the hermetic seal created between the surfaces 74 and 66 forcing all the water injected to circulate through the capsule for the preparation of the hot drink.

The position A-3 is analogous to the position A-1; when this position has been reached the hot drink has already been prepared. In this position the capsule has its surfaces 63 and 64 open/torn.

In the position A-4 the injector remains in the same position and the capsule 23 has been removed from the injector and discharged, via an automatic system, to a store for used capsules that is not shown.

In the case where the capsule was not hermetically sealed, in step A-2 it would not have been necessary to effect the opening/tearing of the upper and lower surfaces of the capsule, but the rest of the method would have been identical.

In the case where the contents of the capsule were a liquid single dose, the process would be the same as described, but without injecting water. In the position A2, the tearing/opening of the surfaces 63, 64 takes place, but hot water is not injected. In the position A3 in which the piston returns to its highest position, air enters the capsule and the drink is delivered. (In said position A3 a capsule for a single dose in the liquid state 89, for example UHT milk, has been shown).

If the user has requested a serving of hot liquid, in this case and before dispensing the serving the single dose will pass through a step of heating in a microwave oven as described and represented with reference to Figure 9.

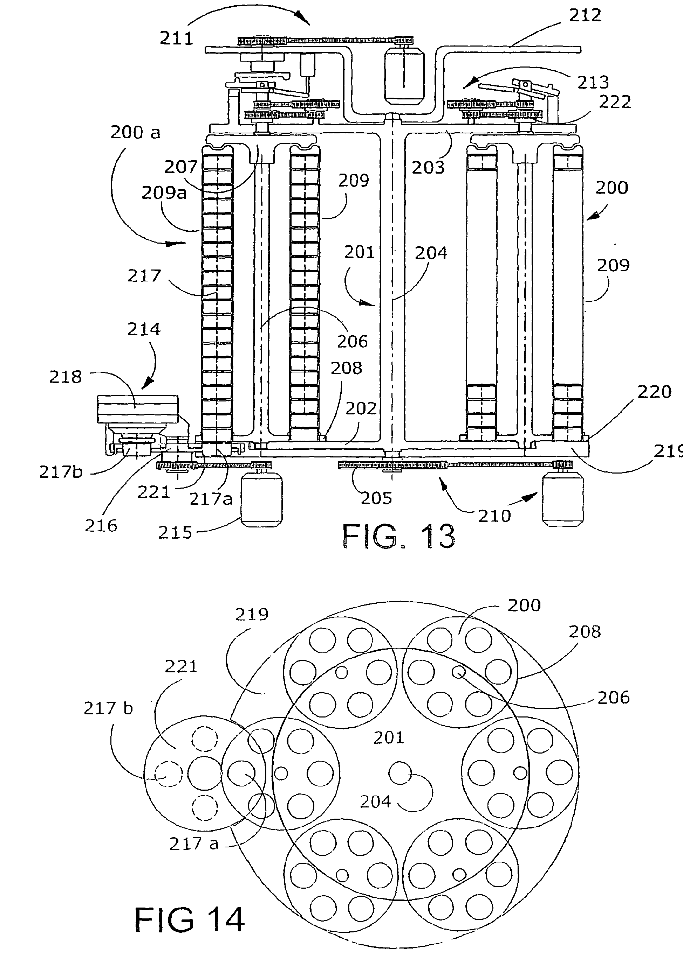

Figure 12 shows another sequence B1-B4 in which the preparation of the hot drink starts from a capsule 79. In said capsule the entry of water into the capsule takes place via multiple perforations in its upper surface, and the hot drink emerges via multiple perforations provided in its lower surface.

In Figure 12, the reference numerals 71b and 72b respectively designate the top and bottom clamps, and 73b is the piston associated with the clamp 71b. The reference 75b designates the water inlet in the piston 73b, and 83 are axially and laterally perforated needles located in the top clamp which perforate the upper surface of the capsule and allow the pressurized water injected through 75b to enter and circulate through the capsule and emerge through axially and laterally perforated needles 84 which perforate the lower surface of the capsule, in this way preparing the hot drink. The hermetic closure between the two clamps is effected via a ring 85 of the capsule which surrounds its entire periphery. The already prepared drink emerges via the outlet 70 to be served in a cup or receptacle that is not shown.

The following methods for the machine in Figs. 1 to 12 are described below: I. Method for replenishing material in the machine of the present invention; and II. Method for the delivery of drinks with a machine of the present invention.
I. Method for replenishing material in the machine of the present invention.
   * Remove from the dispensers 1 the empty packs 10.
   * Put new packs in place of the empty ones, first removing the lower lid of the pack.
      - If the pack has an upper lid and does not contain inert gas, remove the upper lid and put the piston 38 in place.
      - In the case where the new packs have different geometric characteristics, also change the adapters 33.
   * Remove from the dispensers 2 the empty packs 20.
   * Put new packs in place of the empty ones, first removing the upper and lower lid of the pack.
   * Remove from the dispensers 3 the empty packs 30.
   * Put new packs in place of the empty ones, first removing the lower lid of the pack.
      - If the pack has an upper lid and does not contain inert gas, remove the upper lid and put the piston 138 in place.
      - In the case where the new packs have different geometric characteristics, also change the adapters 133.
   * Remove from the dispensers 4 the empty reels 56.
      - Put new packs 40 in place.
   * Replenish liquid single doses.
   * Remove from the dispensers 5 the empty reels.
      - Put new packs 50 in place.
   * Check the stock of cups and replenish if necessary.
   * Fill the water reservoir.
   * Advantageously, when replenishing stocks, the operator, by means of a bar code scanner, portable or associated with the machine, reads the bar code of the packs being extracted and of the packs being put into place, and the central processor receives data via reading, detection or keying-in as to which dispensers the packs have been fitted into. The central processor thereby knows the stock available and the location of the stock.
II. Method for the delivery of drinks with a machine of the present invention.
   * The user selects the drink - (To make the selection, the user takes advantage of being able to see which single dose, type and make are available in the machine).
   * In the case where the drink selected is not available, the conventional central processor of the machine gives a warning signal of product not available. (The machine is equipped with counting and checking systems which make it possible to know whether the machine has stocks available for preparing the drink selected).
   * The user makes a prepayment in a conventional manner.
   * The machine dispenses a cup in a conventional manner.
   * If the drink selected must be prepared from a single dose stored in a dispenser 1, the central processor of the machine actuates the electromagnet 29, which opens the door 26, and dispenses a capsule onto the inclined plane 12 which conveys it to the seat 16, said inclined plane advantageously being able to be substituted by a moving belt or other conveying system.
   * If the drink requested must be prepared from a single dose stored in a dispenser 2, the central processor of the machine actuates the actuating mechanism until the microswitch 21a signals that the capsule has reached the highest outlet position of the pack. The central processor of the machine then actuates the conventional pusher body which dispenses the capsule onto the inclined plane 13 which conveys it to the seat 17.
   * If the drink requested must be prepared from a single dose stored in a dispenser 3, the central processor of the machine actuates the electromagnet 129, the door 126 opens and dispenses a capsule which drops via the tube 14 onto the seat 17.
   * If the drink requested must be prepared from a single dose stored in a dispenser 4, the central processor of the machine actuates the actuating mechanism, causing the belt to advance by one step and stop, then the cutting mechanism 56 is actuated and dispenses the capsule onto the inclined plane 16.
   * The seats 16, 17 have conventional systems for detecting the arrival of the capsule and for reading the bar code of each one. In the case where the capsule does not reach said seats 16, 17, the central processor commands the interruption of the service and the return of the prepaid money. If the detectors read that the capsule that has arrived is not that requested by the user, the capsule is refused and the delivery process starts again. If the detectors read that the capsule that has arrived is that requested by the user, the injection process is initiated.
   * If the machine has only one conventional injector, for example 6 or 7, an automatic insertion mechanism inserts the capsule into the injector, water is injected in a conventional manner, and the drink is delivered. A conventional mechanism then extracts the used capsule and deposits it in a store for used capsules.
   * If the machine has more than one conventional injector 6, 7, an automatic insertion mechanism inserts the capsule selectively in the corresponding injector, water is injected in a conventional manner and the drink is delivered. A conventional mechanism then extracts the used capsule and deposits it in capsule store. If the client has requested a drink which requires two single doses of product for its preparation, for example, expresso coffee with milk obtained from powdered milk, one of them is first prepared, for example, the expresso coffee, and then water is injected to the single dose of powdered milk to prepare the expresso coffee with milk.
   * If the machine has an injector 80 with exchangeable clamps, prior to the insertion of the capsule into the injector the central processor, in dependence on the data supplied to it by the bar code scanners located at 16, 17, regarding the characteristics of the capsule, will effect the corresponding change of clamps, thereafter following the process as in the previous case.
   * If the drink requested must be served by delivering a single dose container of hot liquid 86 and without opening, the conventional dispensing mechanism causes a single dose to advance until it is located inside the microwave oven 87, the doors 88 of the microwave oven 87 are then closed, and heating takes place, then the microwave opens and the capsule continues to move until it is deposited on the platform 18 at the disposal of the user.
   * If the drink requested must be served by pouring the contents of a liquid single dose 89 into a cup 8, the capsule, once it is dispensed from the pack which contains it, for example by the dispensing mechanism 2, is inserted into the injector 80 which, informed of the characteristics of the capsule by the reading of its bar code, will open/tear it at its upper and lower surfaces without injecting water, permitting the entry of air which facilitates the outflow of liquid and pouring thereof into the cup 8.
   * If on requesting the drink the user has also requested the serving of sugar/a spoon, the dispensing mechanism for sugar/a spoon 5, in a similar manner to the dispensing mechanism 4, dispenses a dose of sugar/a spoon. In this case the dose of sugar/a spoon is dispensed directly onto the platform 18.

Figures 13 and 14 describe another preferred embodiment of the machine according to the invention.

The machine comprises a lower part of a static frame 219 of the machine, on which is rotatably supported a main drum 201 which contains a plurality of secondary drums 200 rotatable with respect to the main drum, each of them configured so as to contain a plurality of tubular packs 209, which contain capsules 217.

The packs 209 are distributed evenly and concentrically with respect to the axis 206 of their respective secondary drum 200.

The secondary drums 200 are distributed evenly and concentrically with respect to the axis 204 of the main drum 201.

Firmly connected to the lower part of the static frame 219 of the machine there is a conventional main actuating and control mechanism 210, which controls the rotation of the main drum 201, so as to rotate the main drum in order selectively to bring the selected secondary drum into the selection position.

On the upper part of the static frame 212 a single secondary actuating and control mechanism 211 is located which selectively controls the rotation of the secondary drum 200 positioned in the selection position, in order to bring one of the packs of said selected drum into the selection position.

A selection device 214, having a main body 216 in the shape of a rotatable disc, selectively receives on a seat 221 for capsules the selected capsule 217a and positions it on the conventional injection pump 218 for the preparation of the hot drink.

During the process of selection of the secondary drum and pack, the disc of the selection device remains in an inoperative position so that the seat 221 for the capsules remains in a position located outside the path of the drums and packs.

The method for preparing the drink comprises the following steps:

First, the main control mechanism 210 rotates the main drum 201 to bring the secondary drum 200a which contains the selected pack into the selection position.

Secondly, once the selected secondary drum 200a has been placed in the selection position, the secondary actuating and control mechanism 211 rotates the selected secondary drum in order to bring the selected pack 209a into the selection position.

Thirdly, once the selected pack is in the selection position, the main body of the selection device 216 is rotated in order to drop a selected capsule 217a into the capsule seat 221.

Fourthly, once said selected capsule has dropped into the capsule seat of the selection device, the main body of the selection device is rotated and translates the capsule 217b to the delivery position, in which water is injected and the hot drink is prepared.

When the main body of the selection device rotates and translates the capsule from the selection position to the delivery position, the upper part of said disc prevents a new capsule from emerging from the packs, so that a new selection can be made of main drum and pack which will not be operative until the seat 221 for capsules 217a of the main body of the selection device 216 is brought into the selection position again.

The main body of the selection device 216 has four positions, and a single seat 221, which are clearly visible in Fig. 14: in the first position, on the right, it receives the seat 221 for the selected capsule 217a of the selected pack 209a of the selected drum 200a; in the second position, at the top, it breaks the seal on the upper and lower part of the capsule; in the third position, on the left, the capsule 217b is placed in the delivery position; and in the fourth position, at the bottom, the step of expulsion of the used capsule takes place.

Each of the secondary drums 200 comprises a secondary central post 206, a bottom end 208, a top end 207 and a gearwheel 222. The bottom end is rigidly connected to the secondary post. The upper end can slide axially on said post to adapt to the different lengths of the packs contained in the drum, and the gearwheel is firmly connected to the upper end of the post of the secondary drum.

Each of the respective secondary drums can rotate in a controlled manner about its respective secondary central axis.

A retaining mechanism 213 retains the drum in the selected position so that it prevents the rotation of the drum on its axis, so that each of the secondary drums can rotate on its own axis only when it is placed in the selection position and the secondary actuating and control mechanism 211 releases the conventional retaining mechanism 213 associated with each secondary drum, which retains and actuates it via said mechanism in order to rotate the drum on its own axis and bring the selected pack into the selection position.

The bottom end comprises N internal profiles for engaging with the external profile of the pack, the top end engages with the profile of the upper part of the pack and the distance in a longitudinal direction between the ends can be adjusted to adapt to the different lengths of the packs contained in each drum.

The packs, when placed in the respective secondary drums, are open at the bottom so that the capsule located in the lower part of each pack bears in succession, during the selection process, on the upper surface of the lower part 219 of the machine, on the upper surface of the bottom end of the main drum 202, and on the upper surface 216 of the main body of the selection device 214, before being seated selectively on the capsule seat 221.

The main rotatable drum 201 comprises a bottom end 202, a top end 203, a main post 204 and a toothed pulley 205, firmly connected to the lower end of said post.

The bottom and top ends are constituted by annular surfaces firmly connected to the main post and form an assembly which can rotate in a controlled manner about said main post.

The secondary drums are distributed evenly inside the main drum, so that their axes are parallel and equidistant from the axis of the main drum.

Each of the secondary posts, at its lower part, bears rotatably on a suitable seat located in the bottom end of the main drum. With its upper end, said secondary post is seated in a suitable opening formed in the top end of the main drum. The upper end of the secondary post projects above the upper end of the main drum so that the toothed pulley firmly connected to said post is located above said top end.

The central post of the main drum bears rotatably on the lower part 219 of the machine.

The lower end of the main post projects below said lower part 219 of the machine so that the toothed pulley 205 firmly connected to its bottom end is located below said lower part.

The upper surfaces of the lower part 219, of the bottom end of the main drum 202 and of the main body of the selection device 216 are at substantially the same height and are adjusted so that in a horizontal direction they do not exhibit any noticeable discontinuities, so that they constitute, de *facto,* a single surface on which the capsules bear and slide before being selected.

The present invention having been described sufficiently, the experts in the field will understand that with the packs, the machine and the methods of the present invention all the objectives of the present invention are successfully achieved.

The invention should not be regarded as being limited to the details described, and any modifications and variations which may be necessary may be effected during its production, without thereby departing from the scope thereof, which is defined in the appended claims.

All the technical features mentioned in the claims are followed by reference symbols which are included for the sole purpose of facilitating the understanding thereof and without having any limiting effect on the scope thereof.

## Claims

1. A method for the preparation and delivery of hot drinks, in a machine for preparation and delivery, the method comprising the steps of:
storing in storage means capsules (5, 19, 19a, 19b, 19c, 21, 21a, 22a, 22b, 22c, 23, 23a, 23b, 23c, 23d, 23e, 23f, 79; 217a, 217b, 217c) containing a dose of the solid product from which the hot drink is prepared in at least one pack (10, 10a, 10b, 10c, 20, 30, 30a, 30b, 30c, 40, 40a, 40b, 40c; 209, 209a) of single dose capsules in which they are arranged in an ordered manner, in sequence one after the other, in at least one line or column;
removing the first capsule from at least one pack, by means of dispensing means (1, 1a, 1b, 1c, 2, 3, 3a, 3b, 3c, 4),
conveying the capsule, by means of conveying means, to a station for injecting water under pressure (6, 7, 68, 80; 218);
preparing the drink by injecting water under pressure through the capsule; and
expelling the capsule from the water injection station,
**characterized in that** said conveying step comprises:
rotating the main body of a selection device (216) to a selection position in order to drop said first capsule (217a) into a capsule seat (221) of the selection device; and
further rotating the main body of the selection device in order to move the capsule (217b) to the delivery position in the station for injecting water under pressure (218), in which water is injected and the hot drink is prepared.

2. A method according to claim 1, **characterized in that** at least two packs of single dose capsules of the same food product are stored simultaneously in the machine.

3. A method according to claim 1, **characterized in that** at least two packs of single dose capsules of different size and dimensions and for different products are stored simultaneously in the machine.

4. A method according to any one of the preceding claims, **characterized in that** the single dose capsules of at least one of the packs contain solid products.

5. A method according to any one of the preceding claims, **characterized in that** the single dose capsules of at least one of the packs contain a liquid product.

6. A method according to any one of the preceding claims, **characterized in that** it comprises the steps of:
selecting, in means for interface with the user, the drink to be prepared and delivered;
determining, by means of control means, the pack or packs (10, 10a, 10b, 10c, 20, 30, 30a, 30b, 30c, 40, 40a, 40b, 40c; 209, 209a) stored in the storage means of the machine which contain the capsules (5, 19, 19a, 19b, 19c, 21, 21a, 22a, 22b, 22c, 23, 23a, 23b, 23c, 23d, 23e, 23f, 79; 217a, 217b, 217c) which are involved in the preparation of the drink selected; and
finding out, by means of said control means, whether the packs determined contain at least one capsule;

7. A method according to claim 6, in which, if the finding was negative, the control means give a signal to the interface means to display the information that the selected drink cannot be prepared.

8. A method according to claim 6, **characterized in that**, if the finding was positive, the control means give a signal which enable the stages and steps for preparing and delivering the drink selected by the user.

9. A method according to any one of the preceding claims, **characterized in that** it comprises, before the step of conveying the capsule to a injecting station, the step of breaking a hermetic seal (62, 64) with which the capsule (21, 21a, 23) to be conveyed is provided.

10. A method according to any one of the preceding claims, **characterized in that** the storage step comprises arranging a first plurality of packs (209, 209a) of columns of single dose capsules (217, 217a, 217b) in a secondary rotatable drum (200), in which the packs are in a vertical parallel arrangement about the axis of rotation (206) of said secondary drum, and distributed evenly about said axis; and providing a second plurality of secondary drums (200) in a main rotatable drum (201) with the axes of rotation (206) of the secondary drums arranged parallel and evenly distributed with respect to the axis of rotation (204) of said main drum.

11. A method according to claim 10, **characterized in that** further comprises the steps of
rotating the main drum (201), by means of main control means (210), until a secondary drum (200a) which contains a selected pack (209a) is brought opposite the main body (216) of a selection device (214) adjacent to the injection mechanism (218);
rotating the selected secondary drum (200a), by means of secondary actuation and control means (211), until the selected pack (209a) is positioned facing said main body (216) of said selection device (214);

12. A method according to any one of the preceding claims, **characterized in that** the selection device remains in an inoperative position during the said steps of rotating the main and secondary drums, so that the capsule seat (221) remains in a position located outside the path of the drums and packs.

13. A machine for the preparation and delivery of hot drinks, for the implementation of the method according to any one of claims 1 to 12, particularly from capsules, arranged in packs containing a plurality of capsules (5, 19, 19a, 19b, 19c, 21, 21a, 22a, 22b, 22c, 23, 23a, 23b, 23c, 23d, 23e, 23f, 79; 217a, 217b, 217c) arranged contiguously and consecutively in at least one line or column, said machine comprising storage means for capsules containing a dose of the solid product from which the hot drink is prepared; conveying means (12, 13, 14, 15, 16, 17; 210, 211, 212, 213, 215) for moving the capsules to a station (6, 7, 68, 80; 218) for injecting water under pressure; means for injecting hot water under pressure through the capsule; and means for expelling the used capsule from the water injection station, said storage means comprising at least one support means (25, 125; 200 to 208) suitable for storing packs of capsules of different shapes and sizes; and dispensing means (26, 126; 214, 215) for the first capsule (217a), **characterized in that** it comprises
a selection device (214), provided with a main body (216) in the shape of a rotatable disc, for selectively receiving said first capsule in a seat (221) of said selection device, and positioning by rotating said capsule adjacent to a injection pump (218), for the preparation of the hot drink.

14. A machine according to claim 13, **characterized in that** it comprises at least two support means for packs of single dose capsules of the same food product.

15. A machine according to claim 13, **characterized in that** it comprises at least two support means (25, 125) for packs of single dose capsules of different size and dimensions and for different products.

16. A machine according to any one of claims 13 to 15, **characterized in that** the single dose capsules of at least one of the packs contain solid products.

17. A machine according to any one of claims 13 to 16, **characterized in that** the single dose capsules of at least one of the packs contain a liquid product.

18. A machine according to any one of claims 13 to 17, **characterized in that** it comprises breaking means (75a, 82) for breaking the hermetic seal (62, 64) with which the capsule to be conveyed is provided.

19. A machine according to claim 18, **characterized in that** the breaking means (75a, 82) are suitable for perforating the hermetic seal of the capsule at the lower part (64) and at the upper part (63) thereof.

20. A machine according to claim 13, **characterized in that** said support means (25, 125) are hermetically sealed.

21. A machine according to claim 13, **characterized in that** it comprises, in the storage means, dispensing assemblies (1a, 1b, 1c) provided with a dispenser body (25) of cylindrical shape, open at both ends, the lower of which is closed by a lid (26) which has an extension (27), said lid being able to pivot on an axis (28).

22. A machine according to claim 21, **characterized in that** it comprises pushing means (29) which act on the extension (27) to force said lid (26) to open against the force of a biasing spring (31), the force of the spring (31), when the pushing means are not operative, maintaining the lid against the bottom end of the dispenser body, with the object of producing a hermetic closure between said lid and a seal (32) which surrounds the opening located on the base of the dispenser.

23. A machine according to claim 21 or 22, **characterized in that** the upper opening of said dispenser body (25) has a profile suitable for seating in a sealed manner adapters (33) of tubular shape with both ends open, said upper opening of each of said adapters having a profile and dimensions suitable for seating packs of capsules in a sealed manner.

24. A machine according to claims 21 to 23, **characterized in that** the pushing means comprise an electromagnet (29).

25. A machine according to any one of claims 13 to 24, **characterized in that** it comprises a hot water injector (80) provided with exchangeable clamps, suitable for firmly clamping capsules of different shapes and sizes, said injector having a fixed upper body (68) and a fixed lower body (69) with an outlet for liquids (70), there being mounted respectively in said upper and lower bodies an exchangeable top clamp (71a, 71b) and an exchangeable bottom clamp (72a, 72b), the exchangeable top clamp comprising an upper clamp body (78), detachably connected to the upper body of the injector, which performs in a leaktight manner the injection of water under pressure which said upper body injects as far as the bottom outlet (75) of said exchangeable top clamp, the bottom outlet being arranged in a piston (73a) which slides axially and in a sealed manner inside said clamp (71a) and which has a bottom flange (74) having a flat lower surface shaped to form a leaktight seal with a related surface of a single dose capsule.

26. A machine according to any one of claims 13 to 25, **characterized in that** it comprises means for interface with the user, suitable for selecting the drink to be prepared and delivered; control means, suitable for determining the pack or packs stored in the support means, which contain the capsule or capsules involved in the preparation of the drink selected, for finding out whether such packs determined contain at least one capsule, and for giving a signal to the interface means to display the information that the drink selected cannot be prepared, or to give a signal which enables the stages and steps for preparing and delivering the drink selected by the user.

27. A machine according to claim 26, **characterized in that** it comprises means for reading codes printed on the packs which contain the capsules and which indicate, for example, expiry date, water injection pressure, volume of water to be injected, geometric characteristics of the capsule and number of capsules contained in the pack.

28. A machine according to claim 27, **characterized in that** the control means are suitable for monitoring the correct insertion of the capsule in the injector which corresponds to it according to the printed codes, and for measuring out the quantity of water to be injected in dependence on the characteristics of the capsule.

29. A machine according to claim 26 or 27, **characterized in that** the control means are adapted to refuse expired capsules.

30. A machine according to claim 26 or 27, **characterized in that** the control means comprise means for preventing a capsule from being wrongly inserted into an unsuitable injector in dependence on the geometric characteristics and on the requirements of water injection pressure and volume.

31. A machine according to any one of claims 13 to 30, **characterized in that** the different elements of the machine are covered by transparent covers, which allow the user to see the type of product stored in the machine before requesting the service and to observe the conditions of cleanliness and hygiene of the machine.

32. A machine according to any one of claims 13 to 31, **characterized in that** the storage means comprise means for storing a plurality of single dose containers (86) of liquid drink; means for selecting and heating a single dose container, and for translating said container from a position (86a) in the storage means to a position (86e) adjacent to the injection and expulsion means.

33. A machine according to claim 32, **characterized in that** it comprises means for heating the single dose containers (86).

34. A machine according to claim 33, **characterized in that** said heating means comprise a microwave (87), provided with entry door (88a) and exit door (88b), adapted to open in order to permit the entry and exit of the container (86, 86c), and which remain closed during the heating thereof.

35. A machine according to any one of claims 13 to 34, **characterized in that** it comprises a static frame (219) on which bears, rotatably, a main drum (201) which in turn contains a plurality of secondary drums (200) rotatable with respect to the main drum, distributed evenly and concentrically with respect to the axis (204) of the main drum and shaped so as to contain a plurality of tubular packs (209), which contain capsules (217) stacked in vertical columns, the packs being distributed evenly and concentrically with respect to the axis (206) of its respective secondary drum, the machine also comprising:
a main actuating and control mechanism (210), which is firmly connected to the lower part of said static frame (219) and which controls the rotation of the main drum (201) for the selective positioning of the selected secondary drum in a selection position, adjacent to the injection mechanism (218);
a secondary actuating and control mechanism (211), arranged on the static frame, which selectively controls the rotation of the secondary drum placed in the selection position, in order to bring one of the packs (209a) of said selected drum into said selection position; and
all adapted such that, during the process of selection of the secondary drum (200) and of the pack (209a), the disc of the selection device (214) remains in an inoperative position, so that said seat (221) remains in a position located outside the path of the drums (200, 201) and packs (209, 209a).

36. A machine according to claim 35, **characterized in that** the upper surfaces of the lower part (219), of the bottom end (202) of the main drum and of the main body of the selection device (216) are at substantially the same height and are adjusted so that in a horizontal direction they do not exhibit any noticeable discontinuities, so that they constitute, *de facto*, a single surface on which the capsules bear and slide before being selected.

37. A machine according to anyone of claims 13 to 36, **characterized in that** the selection device (214, 216) has four positions and a single seat (221) including a first position for receiving a selected capsule, a second position for breaking the seal on the upper and lower part of the capsule, a third, delivery position and a fourth position for expulsion of the used capsule.

## Patentansprüche

1. Verfahren für die Zubereitung und Abgabe heißer Getränke, in einer Maschine zur Zubereitung und Abgabe, wobei das Verfahren die Schritte umfasst:
Speichern von Kapseln (5, 19, 19a, 19b, 19c, 21, 21a, 22a, 22b, 22c, 23, 23a, 23b, 23c, 23d, 23e, 23f, 79; 217a, 217b, 217c) in Speichermitteln, wobei die Kapseln eine Portion des festen Produktes enthalten, aus dem das heiße Getränk in wenigstens einem Stapel (10, 10a, 10b, 10c, 20, 30, 30a, 30b, 30c, 40, 40a, 40b, 40c; 209, 209a) EinzelportionskapseJn zubereitet wird, in welchem diese in geordneter Art und Weise angeordnet sind, eine auf die andere folgend, in wenigstens einer Linie oder Kolonne;
Entfernen der ersten Kapsel von wenigstens einem Bündel mittels Ausgabemitteln (1, 1a, 1b, 1c, 2, 3, 3a, 3b, 3c, 4),
Fördern der Kapsel mittels Fördermitteln an eine Station zum Einspritzen von Wasser unter Druck (6, 7, 68, 80; 218), und
Ausstoßen der Kapsel von der Wassereinspritzstation, **dadurch gekennzeichnet, dass** der Förderschritt umfasst:
Drehen des Hauptkörpers einer Auswahlvorrichtung (216) an eine Auswahlposition, um die erste Kapsel (217a) in einen Kapselsitz (221) der Auswahlvorrichtung fallen zu lassen, und
Weiterdrehen des Hauptkörpers der Auswahlvorrichtung, um die Kapsel (217b) an die Abgabeposition in der Station zum Einspritzen von Wasser unter Druck (218) zu bewegen, in welcher Wasser eingespritzt und das heiße Getränk zubereitet wird.

2. Verfahren nach Anspruch 1, **dadurch gekennzeichnet, dass** wenigstens zwei Stapel von Einzelportionskapseln des gleichen Nahrungsmittels gleichzeitig in der Maschine gespeichert werden.

3. Verfahren nach Anspruch 1, **dadurch gekennzeichnet, dass** wenigstens zwei Stapel von Einzelportionskapseln mit unterschiedlicher Größe und Abmessungen und für unterschiedliche Produkte gleichzeitig in der Maschine gespeichert werden.

4. Verfahren nach einem der vorstehenden Ansprüche, **dadurch gekennzeichnet, dass** die Kapseln einzelner Portion von wenigstens einem der Stapel feste Produkte enthalten.

5. Verfahren nach einem der vorstehenden Ansprüche, **dadurch gekennzeichnet, dass** die Einzelportionskapseln von wenigstens einem der Stapel flüssige Produkte enthalten.

6. Verfahren nach einem der vorstehenden Ansprüche, **dadurch gekennzeichnet, dass** dieses die Schritte umfasst:
Auswählen des zuzubereitenden und abzugebenden Getränks über Schnittstellenmittel durch den Benutzer;
Bestimmen, mittels Steuermitteln, den oder die Stapel (10, 10a, 10b, 10c, 20, 30, 30a, 30b, 30c, 40, 40a, 40b, 40c; 209, 209a) in den Speichermitteln der Maschine, welche die Kapseln (5, 19, 19a, 19b, 19c, 21, 21 a, 22a, 22b, 22c, 23, 23a, 23b, 23c, 23d, 23e, 23f, 79; 217a, 217b, 217c) enthalten, welche in die Zubereitung des ausgewählten Getränks einbezogen werden, und
Feststellen, mittels der besagten Steuermittel, ob die bestimmten Stapel wenigstens eine Kapsel enthalten.

7. Verfahren nach Anspruch 6, bei dem, wenn die Feststellung negativ war, das Steuermittel ein Signal an das Schnittstellenmittel abgibt, um die Information anzuzeigen, dass das vorgewählte Getränk nicht zubereitet werden kann.

8. Verfahren nach Anspruch 6, **dadurch gekennzeichnet, dass**, wenn die Feststellung positiv war, das Steuermittel ein Signal abgibt, welches die Stufen und Schritte zum Zubereiten und Abgeben des von dem Benutzer ausgewählten Getränks ermöglicht.

9. Verfahren nach einem der vorstehenden Ansprüche, **dadurch gekennzeichnet, dass** dieses vor dem Schritt des Förderns der Kapsel an eine Einspritzstation den Schritt des Öffnens eines luftdichten Verschlusses (62, 64) umfasst, mit welchem die Kapsel (21, 21 a, 23) versehen ist.

10. Verfahren nach einem der vorstehenden Ansprüche, **dadurch gekennzeichnet, dass** der Speicherschritt ein Anordnen einer ersten Mehrzahl von Stapeln (209, 209a) mit Kolonnen von Einzelportionskapseln (217, 217a, 217b) in einer drehbaren Sekundärtrommel (200) umfasst, in welcher die Stapel in einer vertikalen, parallelen Anordnung um die Drehachse (206) der besagten Sekundärtrommel und gleichmäßig verteilt um besagte Achse sind, und
Vorsehen einer zweite Mehrzahl von Sekundärtrommeln (200) in einer Haupttrommel (201), wobei die Drehachsen (206) der Sekundärtrommeln hinsichtlich der Drehachse (204) der Haupttrommel parallel und gleichmäßig verteilt sind.

11. Verfahren nach Anspruch 10, **dadurch gekennzeichnet, dass** dieses weiterhin die Schritte umfasst:
Drehen der Haupttrommel (201), mittels Hauptsteuermitteln (210), bis eine Sekundärtrommel (200a), welche einen ausgewählten Stapel (209a) enthält, gegenüberliegend dem Hauptkörper (216) einer Auswahlvorrichtung (214) angrenzend zu dem Einspritzmechanismus (218) gebracht ist;
Drehen der ausgewählten Sekundärtrommel (200a), mittels Sekundärbetätigungs- und Steuermitteln (211), bis der ausgewählte Stapel (209a) dem besagten Hauptkörper (216) der besagten Auswahlvorrichtung (214) zugewandt positioniert ist.

12. Verfahren nach einem der vorstehenden Ansprüche, **dadurch gekennzeichnet, dass** die Auswahlvorrichtung während besagter Schritte des Drehens der Haupt- und Sekundärtrommeln in einer nicht wirksamen Position verbleibt, so dass der Kapsefsitz (221) in einer außerhalb des Weges der Trommeln und Stapel liegenden Position bleibt.

13. Maschine für das Zubereiten und Abgeben heißer Getränke, zur Durchführung des Verfahrens nach einem der Ansprüche 1 bis 12, insbesondere aus Kapseln, die in Stapeln angeordnet sind, wobei die Stapel eine Mehrzahl von Kapseln (5, 19, 19a, 19b, 19c, 21, 21a, 22a, 22b, 22c, 23, 23a, 23b, 23c, 23d, 23e, 23f, 79; 217a, 217b, 217c) enthalten, die kontinuierlich und aufeinander folgend in wenigsten einer Linie oder Kolonne angeordnet sind, und wobei die Maschine Speichermittel für die Kapseln enthält, die eine Portion des festen Produktes enthalten, aus dem das heiße Getränk zubereitet wird;
Fördermittel (12, 13, 14, 15, 16, 17; 210, 211, 212, 213, 215) zum Bewegen der Kapseln an eine Station (6, 7, 68, 80; 218) zum Einspritzen von Wasser unter Druck;
Mittel zum Einspritzen von heißem Wasser unter Druck durch die Kapsel,
und Mittel zum Ausstoßen der benutzten Kapsel aus der Wassereinspritzstation, wobei das besagte Speichermittel wenigstens ein Stützmittel (25, 125; 200 bis 208) umfasst, das zum Speichern von Kapselstapeln unterschiedlicher Formen und Größen geeignet ist, und
Ausgabemittel (26, 126; 214, 215) für die erste Kapsel (217a), **dadurch gekennzeichnet, dass** dieses umfasst
eine Auswahlvorrichtung (214), die mit einem Hauptkörper (216) in Form einer drehbaren Scheibe versehen ist, um besagte erste Kapsel selektiv in einem Sitz (221) der besagten Auswahlvorrichtung aufzunehmen, und um durch Drehen die besagte Kapsel angrenzend an eine Einspritzpumpe (218) zu positionieren, um das heiße Getränk zuzubereiten.

14. Maschine nach Anspruch 13, **dadurch gekennzeichnet, dass** diese wenigstens zwei Stützmittel für Stapel von Einzelportionskapseln des gleichen Nahrungsmittels enthält.

15. Maschine nach Anspruch 13, **dadurch gekennzeichnet, dass** diese wenigstens zwei Stützmittel (25, 125) für Stapel von Einzelportionskapseln unterschiedlicher Größe und Abmaße und für unterschiedliche Produkte enthält.

16. Maschine nach einem der Ansprüche 13 bis 15, **dadurch gekennzeichnet, dass** die Einzelportionskapseln von wenigstens einem der Stapel feste Produkte enthalten.

17. Maschine nach einem der Ansprüche 13 bis 16, **dadurch gekennzeichnet, dass** die Einzelportionskapseln von wenigstens einem der Stapel ein flüssiges Produkt enthalten.

18. Maschine nach einem der Ansprüche 13 bis 17, **dadurch gekennzeichnet, dass** diese Öffnungsmittel (75a, 82) zum Öffnen des luftdichten Verschlusses (62, 64) enthält, mit welchem die zu fördernde Kapsel versehen ist.

19. Maschine nach Anspruch 18, **dadurch gekennzeichnet, dass** das Öffnungsmittel (75a, 82) zum Durchlochen des luftdichten Verschlusses der Kapsel an deren unteren Teil (64) und oberen Teil (63) geeignet ist.

20. Maschine nach Anspruch 13, **dadurch gekennzeichnet, dass** das besagte Stützmittel (25, 125) luftdicht verschlossen ist.

21. Maschine nach Anspruch 13, **dadurch gekennzeichnet, dass** diese in dem Speichermittel Ausgabebaugruppen (1a, 1b, 1c) umfasst, die mit einem zylinderförmigen Ausgabekörper (25) versehen sind, offen an beiden Enden, wobei das niedrigere beider Enden durch eine Klappe (26) verschlossen ist, die eine Verlängerung (27) aufweist, wobei besagte Klappe an einer Achse (28) schwenkbar ist.

22. Maschine nach Anspruch 21, **dadurch gekennzeichnet, dass** diese ein Druckmittel (29) umfasst, welches auf die Verlängerung (27) einwirkt, um besagte Kappe (26) zu zwingen, sich gegen die Kraft einer vorgespannten Feder (31) zu öffnen, wobei die Kraft der Feder (31) dann, wenn das Druckmittel nicht wirksam ist, die Klappe gegen das bodenseitige Ende des Ausgabekörpers hält, mit dem Zweck, einen luftdichten Abschluss zwischen besagter Klappe und einer Dichtung (32) zu erzeugen, welche die Öffnung umgibt, die auf der Unterseite der Ausgabe liegt.

23. Maschine nach Anspruch 21 oder 22, **dadurch gekennzeichnet, dass** die obere Öffnung des besagten Ausgabekörpers (25) ein Profil aufweist, das für das abdichtende Einsetzen von rohrförmigen, an beiden Enden offenen Adaptern (33) geeignet ist, wobei besagte obere Öffnung von jedem besagten Adapter ein zum abdichtenden Einsetzen von Kapselstangen geeignetes Profil und dazu geeignete Abmaße aufweist.

24. Maschine nach Ansprüchen 21 bis 23, **dadurch gekennzeichnet, dass** das Druckmittel einen Elektromagneten (29) umfasst.

25. Maschine nach einem der Ansprüche 13 bis 24, **dadurch gekennzeichnet, dass** diese einen Heißwasserinjektor (80) mit austauschbaren Klemmen umfasst, geeignet zum sicheren Festklemmen von Kapseln unterschiedlicher Formen und Größen, wobei besagter Injektor einen starren oberen Körper (68) mit einem Auslass für Flüssigkeiten (70) aufweist, und entsprechend in besagten oberen und unteren Körpern eine austauschbare Kopfklemme (71 a, 71 b) und eine austauschbare Bodenklemme (72a, 72b) angebracht ist, wobei die Kopfklemme einen unteren Klemmkörper (78) umfasst, der abnehmbar mit dem oberen Körper des Injektors verbunden ist, welcher in leckdichter Art das Einspritzen von Wasser unter Druck ausführt, das der obere Körper bis zum Bodenauslass (75) besagter austauschbarer Kopfklemme einspritzt, wobei der Bodenauslass in einem Kolben (73a) angeordnet ist, welcher axial und abdichtend innerhalb besagter Klemme (71a) gleitet, und welcher einen Bodenflansch (74) mit einer flachen unteren Oberfläche aufweist, die zum Bilden eines leckdichten Verschlusses mit einer zugehörigen Oberfläche einer Einzelportionskapsel ausgeformt ist.

26. Maschine nach einem der Ansprüche 13 bis 25, **dadurch gekennzeichnet, dass** diese Schnittstellenmittel für den Benutzer umfasst, die zum Auswählen des zuzubereitenden und abzugebenden Getränks geeignet sind;
Steuermittel, die zum Bestimmung des in dem Stützmittel gespeicherten Stapels oder der darin gespeicherten Stapel geeignet sind, welche die Kapsel oder Kapseln enthalten, die in die Zubereitung des ausgewählten Getränks einbezogen wird oder die darin einbezogen werden, zum Feststellen, ob diese bestimmten Stapel wenigstens eine Kapsel enthalten, und zum Abgeben eines Signals an das Schnittstellenmittel, um die Information anzuzeigen, dass das ausgewählte Getränk nicht zubereitet werden kann, oder zum Abgeben eines Signals, welches die Stufen und Schritte zum Zubereiten und Abgeben des von dem Benutzer ausgewählten Getränks ermöglicht.

27. Maschine nach Anspruch 26, **dadurch gekennzeichnet, dass** diese Mittel zum Lesen von Kodes enthält, die auf den Stapeln aufgedruckt sind, welche die Kapseln enthalten, und welche zum Beispiel Verfallsdatum, Wassereinspritzungdruck, einzuspritzendes Wasservolumen, geometrische Eigenschaften der Kapsel und Anzahl der in dem Stapel enthaltenen Kapseln enthalten.

28. Maschine nach Anspruch 27, **dadurch gekennzeichnet, dass** das Steuermittel zur Überwachung der korrekten Einführung der Kapsel in den Injektor geeignet ist, welche dieser gemäß der aufgedruckten Kodes entspricht, und zum Bemessen der Wassermenge, die in Abhängigkeit von den Eigenschaften der Kapsel eingespritzt werden muss.

29. Maschine nach Anspruch 26 oder 27, **dadurch gekennzeichnet, dass** die Steuermittel zum Abweisen abgelaufener Kapseln angepasst sind.

30. Maschine nach Anspruch 26 oder 27, **dadurch gekennzeichnet, dass** das Steuermittel Mittel zum Verhindern umfasst, dass eine Kapsel in Abhängigkeit von den geometrischen Eigenschaften und den Erfordernissen von Wassereinspritzdruck und -volumen falsch in einen ungeeigneten Injektor eingesetzt wird.

31. Maschine nach einem der Ansprüche 13 bis 30, **dadurch gekennzeichnet, dass** die unterschiedlichen Elemente der Maschine durch transparente Ummantelungen abgedeckt sind, welche dem Benutzer erlauben, die Art des in der Maschine gespeicherten Produktes zu erkennen, bevor der Dienst angefordert wird, und die Gegebenheiten von Sauberkeit und Hygiene der Maschine festzustellen.

32. Maschine entsprechend einem der Ansprüche 13 bis 31, **dadurch gekennzeichnet, dass** die Speichermittel Mittel zum Speichern einer Mehrzahl von Einzelportionsbehältern (86) eines flüssigen Getränks umfassen;
Mittel zum Auswählen und Erhitzen eines Einzelportionsbehälters und zum Überführen besagten Behälters von einer Position (86a) in dem Speichermittel an eine Position (86e) angrenzend an das Einspritz- und Ausstoßmittel.

33. Maschine nach Anspruch 32, **dadurch gekennzeichnet, dass** diese Mittel zum Erhitzen der Einzelportionsbehälter (86) enthält.

34. Maschine nach Anspruch 33, **dadurch gekennzeichnet, dass** besagtes Heizmittel eine Mikrowelle (87) umfasst, die mit einer Eintrittstür (88a) und einer Austrittsstür (88b) ausgestattet ist, deren Öffnen angepasst ist, um den Eintritt und Austritt des Behälters (86, 86c) zu ermöglichen, und welche während des Erhitzens von diesem geschlossen bleibt.

35. Maschine nach einem der Ansprüche 13 bis 34, **dadurch gekennzeichnet, dass** diese einen feststehenden Rahmen (219) umfasst, welcher eine drehbare Haupttrommel (201) trägt, welche wiederum eine Mehrzahl von Sekundärtrommeln (200) enthält, die in Bezug auf die Haupttrommel drehbar sind, die gleichmäßig und konzentrisch in Bezug auf die Achse (204) der Haupttrommel verteilt und derart geformt sind, dass sie ein Mehrzahl von rohrförmigen Stapeln (209) enthalten, welche in vertikalen Kolonnen gestapelte Kapseln (217) enthalten, wobei die Stapel gleichmäßig und konzentrisch in Bezug auf die Achse (206) ihrer entsprechenden Sekundärtrommel verteilt sind, und die Maschine zusätzlich umfasst:
einen Hauptbetätigungs- und Steuermechanismus (210), welcher fest mit dem unteren Teil des besagten feststehenden Rahmens (219) verbunden ist, und welcher die Drehung der Haupttrommel (201) für das ausgewählte Positionieren der ausgewählten Sekundärtrommel in eine Auswahlposition angrenzend an den Einspritzmechanismus (218) steuert;
einen Sekundärbetätigungs- und Steuermechanismus (211), angeordnet an dem feststehenden Rahmen, der selektiv die Drehung der Sekundärtrommel in die Auswahlposition steuert, um einen der Stapel (209a) der besagten ausgewählten Trommel in besagte Auswahlposition zu bringen; und
all dies derart angepasst ist, dass während des Prozesses des Auswählens der Sekundärtrommel (200) und des Stapels (209a) die Scheibe der Auswahlvorrichtung (214) in einer nicht wirksamen Position verbleibt, so dass besagter Sitz (221) in einer Position bleibt, die außerhalb des Weges der Trommeln (200, 201) und Stapel (209, 209a) liegt.

36. Maschine nach Anspruch 35, **dadurch gekennzeichnet, dass** die obere Oberfläche des unteren Teils (219), des bodenseitigen Endes (202) der Haupttrommel und des Hauptkörpers der Auswahlvorrichtung (216) in einer im wesentlichen gleichen Höhe liegen und derart eingestellt sind, dass sie in einer horizontalen Richtung keine nennenswerten Unstetigkeiten aufweisen, so dass sie de facto eine einzige Oberfläche bilden, auf welcher die Kapseln getragen werden und gleiten , bevor sie ausgewählt werden.

37. Maschine nach einem der Ansprüche 13 bis 36, **dadurch gekennzeichnet, dass** die Auswahlvorrichtung (214, 216) vier Positionen und einen einzelnen Sitz (221) einschließlich einer ersten Position zum Aufnehmen einer ausgewählten Kapsel aufweisen, eine zweite Position zum Öffnen des Verschlusses an dem oberen und unteren Teil der Kapsel, eine dritte Abgabeposition und eine vierte Position zum Ausstoß der benutzten Kapsel.

## Revendications

1. Procédé de préparation et de distribution de boissons chaudes, dans une machine de préparation et de distribution, le procédé comprenant les étapes consistant à :
stocker dans des moyens de stockage des capsules (5, 19, 19a, 19b, 19c, 21, 21a, 22a, 22b, 22c, 23, 23a, 23b, 23c, 23d, 23e, 23f, 79 ; 217a, 217b, 217c) contenant une dose du produit solide à partir duquel est préparée la boisson chaude dans au moins un conditionnement (10, 10a, 10b, 10c, 20, 30, 30a, 30b, 30c, 40, 40a, 40b, 40c ; 209, 209a) de capsules monodose dans lequel elles sont agencées d'une manière ordonnée, en séquence l'une après l'autre, en au moins une ligne ou colonne ;
retirer la première capsule de l'au moins un conditionnement, à l'aide de moyens distributeurs (1, 1a, 1b, 1c, 2, 3, 3a, 3b, 3c, 4),
acheminer la capsule, à l'aide de moyens d'acheminement, vers une station d'injection d'eau sous pression (6, 7, 68, 80, 218) ;
préparer la boisson en injectant de l'eau sous pression à travers la capsule ; et
expulser la capsule de la station d'injection d'eau,
**caractérisé en ce que** ladite étape d'acheminement consiste à :
faire tourner le corps principal d'un dispositif de sélection (216) vers une position de sélection afin de faire tomber ladite première capsule (217a) dans un siège de capsule (221) du dispositif de sélection ; et
faire tourner encore le corps principal du dispositif de sélection afin de déplacer la capsule (217b) vers la position de distribution dans la station d'injection d'eau sous pression (218), dans laquelle de l'eau est injectée et la boisson chaude est préparée.

2. Procédé selon la revendication 1, **caractérisé en ce qu'**au moins deux conditionnements de capsules monodose du même produit alimentaire sont stockés simultanément dans la machine.

3. Procédé selon la revendication 1, **caractérisé en ce qu'**au moins deux conditionnements de capsules monodose de différentes tailles et dimensions et pour des produits différents sont stockés simultanément dans la machine.

4. Procédé selon l'une quelconque des revendications précédentes, **caractérisé en ce que** les capsules monodose d'au moins un des conditionnements contiennent des produits solides.

5. Procédé selon l'une quelconque des revendications précédentes, **caractérisé en ce que** les capsules monodose d'au moins un des conditionnements contiennent un produit liquide.

6. Procédé selon l'une quelconque des revendications précédentes, **caractérisé en ce qu'**il comprend les étapes consistant à :
sélectionner, par des moyens d'interface avec l'utilisateur, la boisson devant être préparée et fournie ;
déterminer, à l'aide de moyens de commande, le conditionnement ou les conditionnements (10, 10a, 10b, 10c, 20, 30, 30a, 30b, 30c, 40, 40a, 40b, 40c ; 209, 209a) stockés dans les moyens de stockage de la machine qui contiennent les capsules (5, 19, 19a, 19b, 19c, 21, 21a, 22a, 22b, 22c, 23, 23a, 23b, 23c, 23d, 23e, 23f, 79 ; 217a, 217b, 217c) qui sont impliqués dans la préparation de la boisson choisie ; et
trouver, à l'aide desdits moyens de commande, si les conditionnements déterminés contiennent au moins une capsule.

7. Procédé selon la revendication 6, dans lequel, si le résultat est négatif, les moyens de commande transmettent un signal aux moyens d'interface pour afficher les informations indiquant que la boisson choisie ne peut pas être préparée.

8. Procédé selon la revendication 6, **caractérisé en ce que**, si le résultat est positif, les moyens de commande transmettent un signal qui permet l'exécution des stades et étapes de préparation et de distribution de la boisson choisie par l'utilisateur.

9. Procédé selon l'une quelconque des revendications précédentes, **caractérisé en ce qu'**il comprend, avant l'étape d'acheminement de la capsule vers une station d'injection, l'étape consistant à rompre un joint hermétique (62, 64) dont est doté la capsule (21, 21 a, 23) devant être acheminée.

10. Procédé selon l'une quelconque des revendications précédentes, **caractérisé en ce que** l'étape de stockage comprend l'agencement d'une première pluralité de conditionnements (209, 209a) de colonnes de capsules monodose (217, 217a, 217b) dans un tambour rotatif secondaire (200), dans lequel les conditionnements sont dans un agencement parallèle vertical autour de l'axe de rotation (206) dudit tambour secondaire, et répartis de façon régulière autour dudit axe ; et la fourniture d'une seconde pluralité de tambours secondaires (200) dans un tambour rotatif principal (201), les axes de rotation (206) des tambours secondaires étant agencés parallèlement et répartis de manière régulière par rapport à l'axe de rotation (204) dudit tambour principal.

11. Procédé selon la revendication 10, **caractérisé en ce qu'**il comprend en outre les étapes consistant à :
faire tourner le tambour principal (201), à l'aide de moyens de commande principaux (210), jusqu'à ce qu'un tambour secondaire (200a) qui contient un conditionnement sélectionné (209a) soit amené à l'opposé du corps principal (216) d'un dispositif de sélection (214) adjacent au mécanisme d'injection (218) ;
faire tourner le tambour secondaire sélectionné (200a), à l'aide de moyens d'actionnement et de commande secondaires (211), jusqu'à ce que le conditionnement sélectionné (209a) soit positionné en face dudit corps principal (216) dudit dispositif de sélection (214).

12. Procédé selon l'une quelconque des revendications précédentes, **caractérisé en ce que** le dispositif de sélection reste dans une position inopérante pendant lesdites étapes de rotation des tambours principal et secondaire, de sorte que le siège de capsule (221) reste dans une position située à l'extérieur du trajet des tambours et conditionnements.

13. Machine destinée à la préparation et à la distribution de boissons chaudes, pour la mise en oeuvre du procédé selon l'une quelconque des revendications 1 à 12, en particulier, à partir de capsules agencées en conditionnements contenant une pluralité de capsules (5, 19, 19a, 19b, 19c, 21, 21a, 22a, 22b, 22c, 23, 23a, 23b, 23c, 23d, 23e, 23f, 79 ; 217a, 217b, 217c) agencées de façon contiguë et consécutive en au moins une ligne ou colonne, ladite machine comprenant des moyens de stockage pour des capsules contenant une dose du produit solide à partir duquel la boisson chaude est préparée ; des moyens d'acheminement (12, 13, 14, 15, 16, 17 ; 210, 211, 212, 213, 215) pour déplacer les capsules vers une station (6, 7, 68, 80 ; 218) pour injecter de l'eau sous pression ; des moyens pour injecter de l'eau chaude sous pression à travers la capsule ; et des moyens pour expulser la capsule usagée de la station d'injection d'eau, lesdits moyens de stockage comprenant au moins un moyen de support (25, 125 ; 200 à 208) adapté pour stocker des conditionnements de capsules de différentes formes et tailles ; et des moyens de distribution (26, 126 ; 214, 215) pour la première capsule (217a), **caractérisée en ce qu'**elle comprend :
un dispositif de sélection (214), doté d'un corps principal (216) sous la forme d'un disque rotatif, pour recevoir de façon sélective ladite première capsule dans un siège (221) dudit dispositif de sélection, et positionner par rotation ladite capsule de sorte qu'elle soit adjacente à une pompe d'injection (218), pour la préparation de la boisson chaude.

14. Machine selon la revendication 13, **caractérisée en ce qu'**elle comprend au moins deux moyens de support pour conditionnements de capsules monodose du même produit alimentaire.

15. Machine selon la revendication 13, **caractérisé en ce qu'**elle comprend au moins deux moyens de support (25, 125) pour conditionnements de capsules monodose de différentes tailles et dimensions et pour différents produits.

16. Machine selon l'une quelconque des revendications 13 à 15, **caractérisée en ce que** les capsules monodose d'au moins un des conditionnements contiennent des produits solides.

17. Machine selon l'une quelconque des revendications 13 à 16, **caractérisée en ce que** les capsules monodose d'au moins un des conditionnements contiennent un produit liquide.

18. Machine selon l'une quelconque des revendications 13 à 17, **caractérisée en ce qu'**elle comprend des moyens de rupture (75a, 82) pour rompre le joint hermétique (62, 64) dont est dotée la capsule devant être acheminée.

19. Machine selon la revendication 18, **caractérisé en ce que** les moyens de rupture (75a, 82) sont adaptés pour perforer le joint hermétique de la capsule au niveau de la partie inférieure (64) et de la partie supérieure (63) de celle-ci.

20. Machine selon la revendication 13, **caractérisée en ce que** lesdits moyens de support (25, 125) sont scellés hermétiquement.

21. Machine selon la revendication 13, **caractérisée en ce qu'**elle comprend, dans les moyens de stockage, des ensembles de distribution (1a, 1b, 1c) dotés d'un corps distributeur (25) de forme cylindrique, ouvert aux deux extrémités, dont l'extrémité inférieure est fermée par un couvercle (26) qui présente un prolongement (27), ledit couvercle pouvant pivoter sur un axe (28).

22. Machine selon la revendication 21, **caractérisée en ce qu'**elle comprend des moyens de poussée (29) qui agissent sur ledit prolongement (27) pour forcer l'ouverture dudit couvercle (26) contre la force d'un ressort de pression (31), laquelle force du ressort (31), lorsque les moyens de poussée ne sont pas actifs, maintient le couvercle contre l'extrémité inférieure du corps distributeur, en vue de produire une fermeture hermétique entre ledit couvercle et un joint (32) qui entoure l'ouverture situé sur la base du distributeur.

23. Machine selon la revendication 21 ou 22, **caractérisée en ce que** l'ouverture supérieure dudit corps distributeur (25) a un profil adapté pour loger d'une manière étanche des adaptateurs (33) de forme tubulaire dont les deux extrémités sont ouvertes, ladite ouverture supérieure de chacun desdits adaptateurs ayant un profil et des dimensions adaptés pour loger des conditionnements de capsules d'une manière étanche.

24. Machine selon les revendications 21 à 23, **caractérisée en ce que** les moyens de poussée comprennent un électroaimant (29).

25. Machine selon l'une quelconque des revendications 13 à 24, **caractérisée en ce qu'**elle comprend un injecteur d'eau chaude (80) doté de colliers échangeables, adaptés pour serrer fermement des capsules de différentes formes et tailles, ledit injecteur ayant un corps supérieur fixe (68) et un corps inférieur fixe (69) avec une sortie pour les liquides (70), un collier supérieur échangeable (71a, 71b) et un collier inférieur échangeable (72a, 72b) étant montés respectivement dans lesdits corps supérieur et inférieur, le collier supérieur échangeable comprenant un corps de collier supérieur (78), relié de façon détachable au corps supérieur de l'injecteur, qui effectue d'une manière étanche, l'injection d'eau sous pression que ledit corps supérieur injecte aussi loin que la sortie inférieure (75) dudit collier supérieur échangeable, la sortie inférieure étant agencée dans un piston (73a) qui coulisse axialement et d'une manière étanche à l'intérieur dudit collier (71a) et qui a un rebord inférieur (74) ayant une surface inférieure plane façonnée de sorte à former un joint étanche avec une surface correspondante d'une capsule monodose.

26. Machine selon l'une quelconque des revendications 13 à 25, **caractérisée en ce qu'**elle comprend des moyens d'interface avec l'utilisateur, adaptés pour sélectionner la boisson devant être préparée et fournie ; des moyens de commande, adaptés pour déterminer le conditionnement ou les conditionnements stockés dans les moyens de support, qui contiennent la capsule ou les capsules impliquée(s) dans la préparation de la boisson choisie, pour trouver si de tels conditionnements déterminés contiennent au moins une capsule, et pour envoyer un signal aux moyens d'interface pour afficher les informations indiquant que la boisson choisie ne peut pas être préparée, ou pour envoyer un signal qui permet l'exécution des stades et étapes de préparation et de distribution de la boisson choisie par l'utilisateur.

27. Machine selon la revendication 26, **caractérisée en ce qu'**elle comprend des moyens pour lire des codes imprimés sur les conditionnements qui contiennent les capsules et qui indiquent, par exemple, la date de péremption, la pression d'injection d'eau, le volume d'eau devant être injecté, les caractéristiques géométriques de la capsule et le nombre de capsules contenues dans le conditionnement.

28. Machine selon la revendication 27, **caractérisée en ce que** les moyens de commande sont adaptés pour surveiller l'insertion correcte de la capsule dans l'injecteur correspondant selon les codes imprimés, et pour mesurer la quantité d'eau devant être injectée en fonction des caractéristiques de la capsule.

29. Machine selon la revendication 26 ou 27, **caractérisée en ce que** les moyens de commande sont adaptés pour refuser les capsules périmées.

30. Machine selon la revendication 26 ou 27, **caractérisée en ce que** les moyens de commande comprennent des moyens pour empêcher qu'une capsule ne soit insérée à tort dans un injecteur inadapté en fonction des caractéristiques géométriques et des exigences de pression et de volume d'injection d'eau.

31. Machine selon l'une quelconque des revendications 13 à 30, **caractérisée en ce que** les différents éléments de la machine sont couverts par des caches transparents, qui permettent à l'utilisateur de voir le type de produit stocké dans la machine avant d'utiliser ses services et d'observer les conditions de propreté et d'hygiène de la machine.

32. Machine selon l'une quelconque des revendications 13 à 31, **caractérisée en ce que** les moyens de stockage comprennent des moyens pour stocker une pluralité de conteneurs monodose (86) de boisson liquide ; des moyens pour choisir et chauffer un conteneur monodose, et pour déplacer ledit conteneur d'une position (86a) dans les moyens de stockage à une position (86e) adjacente aux moyens d'injection et d'expulsion.

33. Machine selon la revendication 32, **caractérisée en ce qu'**elle comprend des moyens pour chauffer les conteneurs monodose (86).

34. Machine selon la revendication 33, **caractérisée en ce que** lesdits moyens de réchauffage comprennent un micro-ondes (87), doté d'une porte d'entrée (88a) et d'une porte de sortie (88b), adaptées pour s'ouvrir afin de permettre l'entrée et la sortie du conteneur (86, 86c), et qui restent fermées pendant le réchauffage de celui-ci.

35. Machine selon l'une quelconque des revendications 13 à 34, **caractérisée en ce qu'**elle comprend un cadre statique (219) sur lequel repose, de façon rotative, un tambour principal (201) qui contient à son tour une pluralité de tambours secondaires (200) rotatifs par rapport au tambour principal, répartis de façon régulière et concentrique par rapport à l'axe (204) du tambour principal et façonnés de façon à contenir une pluralité de conditionnements tubulaires (209), qui contiennent des capsules (217) empilées en colonnes verticales, les conditionnements étant répartis de manière régulière et concentrique par rapport à l'axe (206) de leur tambour secondaire respectif, la machine comprenant également :
un mécanisme d'actionnement et de commande principal (210), qui est solidement relié à la partie inférieure dudit cadre statique (219) et qui commande la rotation du tambour principal (201) pour le positionnement sélectif du tambour secondaire sélectionné dans une position de sélection, adjacente au mécanisme de sélection (218) ;
un mécanisme d'actionnement et de commande secondaire (211), agencé sur le cadre statique, qui commande sélectivement la rotation du tambour secondaire placé dans la position de sélection, afin d'amener un des conditionnements (209a) dudit tambour sélectionné dans ladite position de sélection ; et
l'ensemble étant adapté de sorte que, pendant le processus de sélection du tambour secondaire (200) et du conditionnement (209a), le disque du dispositif de sélection (214) reste dans une position inopérante, de sorte que ledit siège (221) reste dans une position située à l'extérieur du trajet des tambours (200, 201) et des conditionnements (209, 209a).

36. Machine selon la revendication 35, **caractérisée en ce que** les surfaces supérieures de la partie inférieure (219), de l'extrémité inférieure (202) dudit tambour principal et du corps principal du dispositif de sélection (216) sont sensiblement à la même hauteur et sont ajustées de sorte que dans une direction horizontale, elles ne présentent pas de discontinuités importantes, de sorte qu'elles constituent, de facto, une seule surface sur laquelle reposent et coulissent les capsules avant d'être choisies.

37. Machine selon l'une quelconque des revendications 13 à 36, **caractérisée en ce que** le dispositif de sélection (214, 216) a quatre positions et un seul siège (221) comprenant une première position pour recevoir une capsule choisie, une seconde position pour rompre le joint sur la partie supérieure et inférieure de la capsule, une troisième position de distribution et une quatrième position pour l'expulsion de la capsule usagée.
